(19) **Europäisches Patentamt / European Patent Office / Office européen des brevets**

(11) **EP 4 779 920 A1**

(12) # EUROPEAN PATENT APPLICATION
published in accordance with Art. 153(4) EPC

(43) Date of publication:
**22.07.2026 Bulletin 2026/30**

(21) Application number: **24876657.8**

(22) Date of filing: **11.10.2024**

(51) International Patent Classification (IPC):
**H04L 5/00** *(2006.01)* **H04W 72/0446** *(2023.01)*

(52) Cooperative Patent Classification (CPC):
**H04B 7/0456; H04L 5/00; H04W 72/0446; H04W 72/231**

(86) International application number:
**PCT/CN2024/124276**

(87) International publication number:
**WO 2025/077852 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 CN 202311326997**

(71) Applicant: **HUAWEI TECHNOLOGIES CO., LTD.
Shenzhen 518129 (CN)**

(72) Inventors:
• **ZHANG, Zijian
Shenzhen, Guangdong 518129 (CN)**

• **GAO, Xiang
Shenzhen, Guangdong 518129 (CN)**
• **LIAN, Jin
Shenzhen, Guangdong 518129 (CN)**
• **ZHANG, Zhening
Shenzhen, Guangdong 518129 (CN)**
• **LIU, Kunpeng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) ## SIGNAL TRANSMISSION METHOD AND TRANSMISSION APPARATUS

(57) This application provides a signal transmission method and apparatus to reduce system overhead. The method is applied to a terminal device, and the method includes: receiving first configuration information from a network device, where the first configuration information indicates S reference signal resources, the S reference signal resources include K reference signal ports, the K reference signal ports are K reference signal ports in M reference signal ports, each of the M reference signal ports corresponds to a distinct antenna port of the terminal device, and S, K, and M are positive integers; and sending the S reference signal resources to the network device based on the first configuration information through the K reference signal ports.

[FIG. 6]

600

Terminal device — Network device

S601: First configuration information, where the first configuration information indicates S reference signal resources, the S reference signal resources include K reference signal ports, and the K reference signal ports are K reference signal ports in M reference signal ports

S602: Send the S reference signal resources to the network device based on the first configuration information through the K reference signal ports

**Description**

This application claims priority to Chinese Patent Application No. 202311326997.5, filed with the China National Intellectual Property Administration on October 12, 2023 and entitled "SIGNAL TRANSMISSION METHOD AND APPARATUS", which is incorporated herein by reference in its entirety.

TECHNICAL FIELD

Embodiments of this application relate to the communication field, and in particular, to a signal transmission method and apparatus in the communication field.

BACKGROUND

Multiple-input multiple-output (multiple-user multiple-input multiple-output, MIMO) technology is now widely used in communication systems to provide a high data transmission rate and improve communication quality. When MIMO is used, a network device needs to precode data before sending the data to a terminal device, and precoding depends on channel state information (channel state information, CSI). Usually, when there is reciprocity between an uplink channel and a downlink channel, for example, in a time division duplex (time division duplex, TDD) system, the network device may obtain CSI of the downlink channel over the uplink channel by using the reciprocity between the channels. For example, the terminal device may send a channel sounding reference signal (sounding reference signal, SRS) resource to the network device. The network device receives the SRS resource from the terminal device, and may determine CSI of the uplink channel and the CSI of the downlink channel based on the SRS resource. However, when the terminal device has fewer transmit antennas than receive antennas, it is difficult for the network device to accurately obtain the CSI of the downlink channel based only on reference signals of a quantity of transmit antennas. Therefore, when the network device needs to perform channel measurement on the downlink channel, antenna switching is required during SRS resource transmission by the terminal device. For example, for a terminal device that supports NTMR, the network device may configure, for the terminal device, SRS resources corresponding to M SRS ports, and the terminal device may send the SRS resources through M antenna ports. Upon receiving the SRS resources from the terminal device, the network device may determine channel information of the M SRS ports based on the SRS resources.

However, this signal transmission method leads to high system overhead.

SUMMARY

This application provides a signal transmission method and apparatus to reduce system overhead.

According to a first aspect, a signal transmission method is provided, applied to a terminal device. The method includes: receiving first configuration information from a network device, where the first configuration information indicates S reference signal resources, the S reference signal resources include K reference signal ports, the K reference signal ports are K ports in M reference signal ports, each of the M reference signal ports corresponds to a distinct antenna port of the terminal device, and S, K, and M are positive integers; and sending the S reference signal resources to the network device based on the first configuration information through the K reference signal ports in the M reference signal ports.

According to the signal transmission method in this application, for the terminal device that supports NTMR, the network device configures S reference signal resources for the terminal device, and the S reference signal resources include K reference signal ports. In an antenna switching scenario, by setting K to an integer less than M, the terminal device can send the S reference signal resources to the network device through the K reference signal ports. This allows the network device to obtain channel information of the K reference signal ports, and further determine channel information of the M reference signal ports based on correlation between the M reference signal ports and the channel information of the K reference signal ports. Compared with a case in which the network device configures, for the terminal device, reference signal resources corresponding to the M reference signal ports, and the terminal device sends, to the network device through the M reference signal ports, the reference signal resources corresponding to the M reference signal ports, the proposed method of sending, by the terminal device, the S reference signal resources to the network device through the K reference signal ports reduces system overhead. In addition, because the S reference signal resources are a subset of the reference signal resources corresponding to the M reference signal ports, a guard interval for sending the S reference signal resources by the terminal device is also shorter than that for sending the reference signal resources corresponding to the M reference signal ports.

It should be understood that the first configuration information may be radio resource control (radio resource control, RRC) information or other higher layer information. The reference signal may be but is not limited to one or both of the following: a sounding reference signal (sounding reference signal, SRS) and a demodulation reference signal (demodulation reference signal, DMRS). The statement the S reference signal resources include the K reference signal ports may be understood as that a total quantity of reference signal ports included in the S reference signal resources is K.

With reference to the first aspect, in some implementations of the first aspect, each of the S reference signal resources is sent on a different time domain symbol, and each of the S reference signal resources includes K/S reference signal ports, where K is an integer multiple of S, and / indicates division.

It should be understood that, the statement each of the S reference signal resources is sent on the different time domain symbol means that each of the S reference signal resources is sent on a different time domain symbol in a unit time unit, and the unit time unit may also be understood as a time slot. Each unit time unit includes a plurality of time domain symbols. K/S may be understood as a ratio of K to S, and K/S is a positive integer. The statement each of the S reference signal resources includes the K/S reference signal ports means that each of the S reference signal resources includes a same quantity of reference signal ports, and K/S reference signal ports included in different reference signal resources may be the same or different.

With reference to the first aspect, in some implementations of the first aspect, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

It should be understood that, the statement the at least one index indicates the K reference signal ports means that the at least one index indicates that the K reference signal ports are the K reference signal ports in the M reference signal ports. The plurality of groups of reference signal ports are obtained by grouping the M reference signal ports. Each group of reference signal ports may include the same quantity of reference signal ports, and the reference signal ports included in different groups of reference signal ports may not be completely the same.

With reference to the first aspect, in some implementations of the first aspect, the first correspondence is configured by the network device via signaling, or the first correspondence is specified in a protocol.

With reference to the first aspect, in some implementations of the first aspect, the first configuration information includes port identifiers of the K reference signal ports.

It should be understood that, the statement the first configuration information includes the port identifiers of the K reference signal ports means that the network device indicates, by using the port identifiers of the K reference signal ports, that the K reference signal ports are the K reference signal ports in the M reference signal ports. Each of the K reference signal ports corresponds to one port identifier. The port identifiers of the K reference signal ports are K port identifiers in port identifiers of the M reference signal ports. The port identifiers of the M reference signal ports may be configured by the network device via signaling, or the port identifiers of the M reference signal ports may be specified in a protocol.

With reference to the first aspect, in some implementations of the first aspect, the first configuration information includes a bitmap, and the bitmap indicates the K reference signal ports.

It should be understood that the bitmap indicating the K reference signal ports includes M bits, the M bits of the bitmap indicating the K reference signal ports correspond one-to-one to the M reference signal ports, and each bit indicates whether its corresponding reference signal port is selected. For example, in the bitmap, a value of 0 may mean a port is not selected and 1 may mean it is selected; alternatively, 0 may mean a port is selected and 1 may mean it is not selected.

With reference to the first aspect, in some implementations of the first aspect, the bitmap is determined by using the following formula:

$$B=f_1(M, K),$$

where

B is the bitmap, and $f_1(M, K)$ is a function value that varies with M and K.

It should be understood that, for B generated based on $f_1(M, K)$, B may include M bits, and B includes K 1s or K 0s. When B includes K 1s, a value of 1 may indicate being selected. When B includes K 0s, a value of 0 may indicate being selected. The K 1s or the K 0s may be located anywhere within B.

With reference to the first aspect, in some implementations of the first aspect, K reference signal ports included in S reference signal resources are different across G consecutive transmissions by the terminal device, and G is an integer greater than or equal to 2.

It should be understood that the G consecutive transmissions means adjacent G transmissions in the chronological sequence of sending the S reference signal resources. A single transmission is defined as the terminal device completing the sending of S reference signal resources. After the initial transmission, the following G-1 consecutive transmissions are collectively referred to as G consecutive transmissions. Each time the terminal device transmits a reference signal resource, it transmits the S reference signal resources configured in the first configuration information. However, for at least two of the G consecutive transmissions for the S reference signal resources, K reference signal ports included in the S reference signal resources of one transmission are different from K reference signal ports included in the S reference signal resources of another transmission.

With reference to the first aspect, in some implementations of the first aspect, a reference signal port included in S reference signal resources sent for an ith transmission among the G consecutive transmissions is determined by using the following formula:

$$p_i = f_2(p_1, p_{offset}, i),$$

where

$p_i$ is information indicating the reference signal port included in the S reference signal resources sent for the ith transmission, $f_2(p_1, p_{offset}, i_1$, $p_{offset}$, and i, $p_1$ is information indicating a reference signal port included in S reference signal resources sent for a first transmission, $p_{offset}$ is an offset value of the information indicating the reference signal port, and i is an integer greater than or equal to 2 and less than or equal to G.

It should be understood that $p_i$ may be, for example, an index, or may be other information indicating the reference signal port.

With reference to the first aspect, in some implementations of the first aspect, the offset value is specified in a protocol, or the offset value is configured by the network device via signaling.

With reference to the first aspect, in some implementations of the first aspect, the first configuration information further includes information used to configure P reference signal resources, the P reference signal resources include the M reference signal ports, and P is a positive integer; and the method further includes: sending the P reference signal resources to the network device through the M reference signal ports.

It should be understood that, based on the first configuration information, the network device configures, for the terminal device, the P reference signal resources corresponding to the M reference signal ports and the S reference signal resources corresponding to the K reference signal ports, and the K reference signal ports are a subset of the M reference signal ports, and the S reference signal resources are a subset of the P reference signal resources. When the terminal device sends the S reference signal resources to the network device through the K reference signal ports, the network device may obtain the channel information of the K reference signal ports based on the S reference signal resources from the terminal device. When the terminal device sends the P reference signal resources to the network device through the M reference signal ports, the network device may obtain the channel information of the M reference signal ports based on the P reference signal resources from the terminal device.

With reference to the first aspect, in some implementations of the first aspect, the first configuration information further indicates that a sending period of the S reference signal resources is a first period and a sending period of the P reference signal resources is a second period; sending the S reference signal resources to the network device through the K reference signal ports includes: sending the S reference signal resources to the network device based on the first sending period through the K reference signal ports; and sending the P reference signal resources to the network device through the M reference signal ports includes: sending the P reference signal resources to the network device based on the second sending period through the M reference signal ports.

It should be understood that, according to the foregoing technical solution, the network device may obtain, at an interval of a time length corresponding to the first period, the channel information of the M reference signal ports corresponding to the P reference signal resources, obtain, at an interval of a time length corresponding to the second period, the channel information of the K reference signal ports corresponding to the S reference signal resources, and determine the channel information of the M reference signal ports by using the correlation between the M reference signal ports and based on the channel information of the K reference signal ports. Compared with that determined by obtaining only the channel information of the K reference signal ports corresponding to the S reference signal resources, accuracy that is of the channel information of the M reference signal ports and that is determined by the network device is higher. In addition, compared with those in a case in which the terminal device sends the P reference signal resources to the network device based on the second period through the M reference signal ports, system overhead is lower, and the guard interval required for sending the S reference signal resources by the terminal device is shorter. This helps reduce a channel measurement delay and improve channel estimation performance, enhance a downlink precoding capability of the network device, and improve a network throughput.

With reference to the first aspect, in some implementations of the first aspect, S=1, and the S reference signal resources are sent on a same time domain symbol.

With reference to the first aspect, in some implementations of the first aspect, the terminal device supports NTMR, each of the S reference signal resources is sent on each of S different time domain symbols, the S time domain symbols include Z groups of time domain symbols, each of the Z groups of time domain symbols includes N contiguous time domain symbols, there is a time interval between any two of the Z groups of time domain symbols, the time interval is greater than or equal to a first interval Y, each of the S reference signal resources includes the K/S reference signal ports, and Z is an integer obtained by rounding up a ratio of S to N.

It should be understood that K is the integer multiple of S, and K/S indicates the ratio of K to S.

According to a second aspect, another signal transmission method is provided, applied to a network device. The method includes: sending first configuration information to a terminal device, where the first configuration information indicates S reference signal resources, the S reference signal resources include K reference signal ports, the K reference signal ports are K reference signal ports in M reference signal ports, each of the M reference signal ports corresponds to a distinct antenna port of the terminal device, and S, K, and M are positive integers; and receiving the S reference signal resources from the terminal device, and obtaining channel information of the K reference signal ports.

With reference to the second aspect, in some implementations of the second aspect, each of the S reference signal resources is sent on a different time domain symbol, and each of the S reference signal resources includes K/S reference signal ports, where K is an integer multiple of S, and / indicates division.

With reference to the second aspect, in some implementations of the second aspect, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

With reference to the second aspect, in some implementations of the second aspect, the first correspondence is configured by the network device via signaling, or the first correspondence is specified in a protocol.

With reference to the second aspect, in some implementations of the second aspect, the first configuration information includes port identifiers of the K reference signal ports.

With reference to the second aspect, in some implementations of the second aspect, the first configuration information includes a bitmap, and the bitmap indicates the K reference signal ports.

With reference to the second aspect, in some implementations of the second aspect, the bitmap is determined by using the following formula:

$$B=f_1(M, K),$$

where
B is the bitmap, and $f_1(M, K)$ is a function value that varies with M and K.

With reference to the second aspect, in some implementations of the second aspect, K reference signal ports included in S reference signal resources are different across G consecutive transmissions by the terminal device, and G is an integer greater than or equal to 2.

With reference to the second aspect, in some implementations of the second aspect, a reference signal port included in S reference signal resources sent for an $i^{th}$ transmission among the G consecutive transmissions is determined by using the following formula:

$$p_i = f_2(p_1, p_{offset}, i),$$

where
$p_i$ is information indicating the reference signal port included in the S reference signal resources sent for the $i^{th}$ transmission, $f_2(p_1, p_{offset}, i_1$, $p_{offset}$, and i, $p_1$ is information indicating a reference signal port included in S reference signal resources sent for a first transmission, $p_{offset}$ is an offset value of the information indicating the reference signal port, and i is a positive integer greater than or equal to 2 and less than or equal to G.

With reference to the second aspect, in some implementations of the second aspect, the offset value is specified in a protocol, or the offset value is configured by the network device via signaling.

With reference to the second aspect, in some implementations of the second aspect, the first configuration information further includes information used to configure P reference signal resources, the P reference signal resources include the M reference signal ports, and P is a positive integer; and the method further includes: receiving the P reference signal resources from the terminal device, and obtaining channel information of the M reference signal ports.

With reference to the second aspect, in some implementations of the second aspect, the first configuration information further indicates that a sending period of the S reference signal resources is a first period and a sending period of the P reference signal resources is a second period; receiving the S reference signal resources sent by the terminal device includes: receiving, based on the first period, the S reference signal resources sent by the terminal device; and receiving the P reference signal resources sent by the terminal device includes: receiving, based on the second period, the P reference signal resources sent by the terminal device.

With reference to the second aspect, in some implementations of the second aspect, the terminal device supports NTMR, each of the S reference signal resources is sent on each of S different time domain symbols, the S time domain symbols include Z groups of time domain symbols, each of the Z groups of time domain symbols includes N contiguous time domain symbols, there is a time interval between any two of the Z groups of time domain symbols, the time interval is greater than or equal to a first interval Y, each of the S reference signal resources includes the K/S reference signal ports, and Z is an integer obtained by rounding up a ratio of S to N.

According to a third aspect, another signal transmission method is provided, applied to a terminal device. The method includes: receiving first configuration information from a network device, where the first configuration information indicates at least one reference signal resource, each of the at least one reference signal resource includes K reference signal ports, the K reference signal ports are K ports in N reference signal ports, each of the N reference signal ports corresponds to a distinct antenna port of the terminal device, and K and N are positive integers; and sending one of the at least one reference signal resource to the network device based on the first configuration information through the K reference signal ports.

With reference to the third aspect, in some implementations of the third aspect, the reference signal resource is sent on one time domain symbol.

With reference to the third aspect, in some implementations of the third aspect, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

It should be understood that the plurality of groups of reference signal ports are obtained by grouping the N reference signal ports.

With reference to the third aspect, in some implementations of the third aspect, the first correspondence is configured by the network device via signaling, or the first correspondence is specified in a protocol.

With reference to the third aspect, in some implementations of the third aspect, the first configuration information includes port identifiers of the K reference signal ports.

With reference to the third aspect, in some implementations of the third aspect, the first configuration information includes a bitmap, and the bitmap indicates the K reference signal ports.

With reference to the third aspect, in some implementations of the third aspect, the bitmap is determined by using the following formula:

$$B = f_1(N, K),$$

where

B is the bitmap, and $f_1(M, K)$ is a function value that varies with N and K.

With reference to the third aspect, in some implementations of the third aspect, K reference signal ports included in S reference signal resources are different across G consecutive transmissions by the terminal device, and G is an integer greater than or equal to 2.

With reference to the third aspect, in some implementations of the third aspect, a reference signal port included in S reference signal resources sent for an $i^{th}$ transmission among the G consecutive transmissions is determined by using the following formula:

$$p_i = f_2(p_1, p_{offset}, i),$$

where

$p_i$ is information indicating a reference signal port included in one reference signal resource sent for the $i^{th}$ transmission, $f_2$ ($p_1, p_{offset}, i$) is a function value that varies with $p_1$, $p_{offset}$, and i, $p_1$ is information indicating a reference signal port included in one reference signal resource sent for a first transmission, $p_{offset}$ is an offset value of the information indicating the reference signal port, and i is an integer greater than or equal to 2 and less than or equal to G.

With reference to the third aspect, in some implementations of the third aspect, the offset value is specified in a protocol, or the offset value is configured by the network device via signaling.

With reference to the third aspect, in some implementations of the third aspect, the first configuration information further includes information used to configure P reference signal resources, the P reference signal resources include the N reference signal ports, and P is a positive integer; and the method further includes: sending the P reference signal resources to the network device through the M reference signal ports.

With reference to the third aspect, in some implementations of the third aspect, the first configuration information further indicates that a sending period of the reference signal resource is a first period and a sending period of the P reference signal resources is a second period; sending the S reference signal resources to the network device through the K reference signal ports includes: sending the S reference signal resources to the network device based on the first period through the K reference signal ports; and sending the P reference signal resources to the network device through the N reference signal ports includes: sending the P reference signal resources to the network device based on the second period through the N reference signal ports.

With reference to the third aspect, in some implementations of the third aspect, the terminal device supports NTMR, and each of the at least one reference signal resource is sent on at least a different time domain symbol.

It should be understood that a product of a quantity of reference signal resources included in the at least one reference signal resource and K may be less than N.

According to a fourth aspect, another signal transmission method is provided, applied to a network device. The method includes: sending first configuration information to a terminal device, where the first configuration information indicates at least one reference signal resource, each of the at least one reference signal resource includes K reference signal ports, the K reference signal ports are K ports in N reference signal ports, each of the N reference signal ports corresponds to a distinct antenna port of the terminal device, and K and N are positive integers; and receiving one of the at least one reference signal resource from the terminal device, and obtaining channel information of the K reference signal ports.

With reference to the fourth aspect, in some implementations of the fourth aspect, the reference signal resource is sent on one time domain symbol.

With reference to the fourth aspect, in some implementations of the fourth aspect, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

With reference to the fourth aspect, in some implementations of the fourth aspect, the first correspondence is configured by the network device via signaling, or the first correspondence is specified in a protocol.

With reference to the fourth aspect, in some implementations of the fourth aspect, the first configuration information includes port identifiers of the K reference signal ports.

With reference to the fourth aspect, in some implementations of the fourth aspect, the first configuration information includes a bitmap, and the bitmap indicates the K reference signal ports.

With reference to the fourth aspect, in some implementations of the fourth aspect, the bitmap is determined by using the following formula:

$$B=f_1(N, K),$$

where
B is the bitmap, and $f_1(M, K)$ is a function value that varies with N and K.

With reference to the fourth aspect, in some implementations of the fourth aspect, K reference signal ports included in S reference signal resources are different across G consecutive transmissions by the terminal device, and G is an integer greater than or equal to 2.

With reference to the fourth aspect, in some implementations of the fourth aspect, a reference signal port included in S reference signal resources sent for an $i^{th}$ transmission among the G consecutive transmissions is determined by using the following formula:

$$p_i = f_2(p_1, p_{offset}, i),$$

where
$p_i$ is information indicating a reference signal port included in one reference signal resource sent for the $i^{th}$ transmission, $f_2$ $(p_1, p_{offset}, i_1, p_{offset}$, and i, $p_1$ is information indicating a reference signal port included in one reference signal resource sent for a first transmission, $p_{offset}$ is an offset value of the information indicating the reference signal port, and i is an integer greater than or equal to 2 and less than or equal to G.

With reference to the fourth aspect, in some implementations of the fourth aspect, the offset value is specified in a protocol, or the offset value is configured by the network device via signaling.

With reference to the fourth aspect, in some implementations of the fourth aspect, the first configuration information further includes information used to configure P reference signal resources, the P reference signal resources include the N reference signal ports, and P is a positive integer; and the method further includes: sending the P reference signal resources to the network device through the M reference signal ports.

With reference to the fourth aspect, in some implementations of the fourth aspect, the first configuration information further indicates that a sending period of the reference signal resource is a first period and a sending period of the P reference signal resources is a second period; receiving the S reference signal resources from the terminal device includes: receiving, based on the first period, the S reference signal resources from the terminal device; and receiving the P reference signal resources from the terminal device includes: receiving, based on the second period, the P reference signal resources from the terminal device.

According to a fifth aspect, a signal transmission apparatus is provided, configured to perform the method according to possible implementation of the first aspect, the second aspect, the third aspect, or the fourth aspect. Specifically, the apparatus includes a module configured to perform the method according to any possible implementation of the first aspect, the second aspect, the third aspect, or the fourth aspect.

According to a sixth aspect, this application provides another signal transmission apparatus, including a processor. The processor is coupled to a memory and may be configured to execute instructions in the memory, to implement the method according to any possible implementation of the first aspect, the second aspect, the third aspect, or the fourth aspect. Optionally, the apparatus further includes the memory. Optionally, the apparatus further includes a communication interface, and the processor is coupled to the communication interface.

In an implementation, the apparatus is a terminal device. When the apparatus is a terminal device, the communication interface may be a transceiver or an input/output interface.

In another implementation, the apparatus is a chip configured in the terminal device. When the apparatus is the chip configured in the terminal device, the communication interface may be an input/output interface.

In an implementation, the apparatus is a terminal device. When the apparatus is the network device, the communication interface may be a transceiver or an input/output interface.

In still another implementation, the apparatus is a chip configured in the network device. When the apparatus is the chip configured in the network device, the communication interface may be an input/output interface.

According to a seventh aspect, a processor is provided, including an input circuit, an output circuit, and a processing circuit. The processing circuit is configured to: receive a signal through the input circuit, and transmit a signal through the output circuit, so that the processor is enabled to perform the method according to any possible implementation of the first aspect, the second aspect, the third aspect, or the fourth aspect.

In a specific implementation procedure, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to: read instructions stored in the memory, receive a signal via a receiver, and transmit a signal via a transmitter, to perform the method according to any possible implementation of the first aspect, the second aspect, the third aspect, or the fourth aspect.

Optionally, there are one or more processors, and there are one or more memories.

Optionally, the memory may be integrated with the processor, or the memory and the processor are separately disposed.

In a specific implementation procedure, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that, a related data exchange procedure like sending of indication information may be a procedure of outputting the indication information from the processor, and receiving of capability information may be a procedure of receiving the input capability information by the processor. Specifically, data output by the processor may be output to a transmitter, and input data received by the processor may be from a receiver. The transmitter and the receiver may be collectively referred to as a transceiver.

The processing apparatus in the eighth aspect may be a chip. The processor may be implemented by hardware or software. When the processor is implemented by hardware, the processor may be a logic circuit, an integrated circuit, or the like. When the processor is implemented by software, the processor may be a general-purpose processor, and may be implemented by reading software code stored in the memory. The memory may be integrated into the processor, or may be located outside the processor and exist independently.

According to a ninth aspect, a computer program product is provided. The computer program product includes a computer program (which may alternatively be referred to as code or instructions). When the computer program is run, a computer is enabled to perform the method according to any possible implementation of the first aspect, the second aspect, the third aspect, or the fourth aspect.

According to a tenth aspect, a computer-readable storage medium is provided. The computer-readable storage medium stores a computer program (which may alternatively be referred to as code or instructions). When the computer program is run on a computer, the computer is enabled to perform the method according to any possible implementation of the first aspect, the second aspect, the third aspect, or the fourth aspect.

BRIEF DESCRIPTION OF DRAWINGS

FIG. 1 is a diagram of a process in which a terminal device sends reference signal resources in different frequency hopping bandwidths;
FIG. 2 is a diagram of a communication system to which embodiments of this application are applied;
FIG. 3 is a diagram of a process in which a terminal device that supports 1T8R sends SRS resources;
FIG. 4 is a diagram of a process in which a terminal device that supports 2T8R sends SRS resources;
FIG. 5 is a diagram of a process in which a terminal device that supports 4T8R sends SRS resources;
FIG. 6 is a schematic flowchart of a signal transmission method according to an embodiment of this application;
FIG. 7 is a diagram of a process in which a terminal device sends SRS resources according to an embodiment of this application;
FIG. 8 is a diagram of a bitmap according to an embodiment of this application;
FIG. 9 is a diagram of another bitmap according to an embodiment of this application;
FIG. 10A to FIG. 10C are diagrams of another process in which a terminal device sends SRS resources according to an embodiment of this application;
FIG. 11A to FIG. 11C are diagrams of still another process in which a terminal device sends SRS resources according to an embodiment of this application;
FIG. 12 is a diagram of yet another process in which a terminal device sends SRS resources according to an embodiment of this application;
FIG. 13 is a diagram of still yet another process in which a terminal device sends SRS resources according to an embodiment of this application;
FIG. 14 is a diagram of a process in which a terminal device that supports NTMR sends SRS resources according to an embodiment of this application;
FIG. 15 is a block diagram of a signal transmission apparatus according to an embodiment of this application; and
FIG. 16 is a block diagram of another signal transmission apparatus according to an embodiment of this application.

DESCRIPTION OF EMBODIMENTS

The following describes technical solutions of this application with reference to accompanying drawings.
In embodiments of this application, terms "first", "second", and the like are used to distinguish between same items or similar items that have basically same functions and purposes. For example, a first value and a second value are merely used to distinguish between different values, and a sequence thereof is not limited. A person skilled in the art may understand that the terms such as "first" and "second" do not limit a quantity or an execution sequence, and the terms such as "first" and "second" do not indicate a definite difference.
It should be noted that, in embodiments of this application, a word "example" or "for example" is used to give an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.
In embodiments of this application, "at least one" means one or more, and "a plurality of" means two or more. A term "and/or" describes an association relationship between associated objects, and indicates that three relationships may exist. For example, A and/or B may indicate the following three cases: A exists alone, both A and B exist, and B exists alone, where A and B may be singular or plural. A character "/" usually indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.
Technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, and a future evolved communication system, for example, a 6th generation (6th generation, 6G) system.
A terminal device in embodiments of this application may also be referred to as user equipment (UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device with a wireless connection function. Currently, examples of some terminal devices include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like. This is not limited in this application.

As an example instead of a limitation, in this application, the terminal device may be a terminal device in an internet of things (internet of things, IoT) system. The internet of things is an important part of the future information technology development. A main technical feature of the internet of things is connecting a thing to a network by using a communication technology, to implement an intelligent network for interconnection between a person and a machine or between things. For example, the terminal device in embodiments of this application may be a wearable device. The wearable device may also be referred to as a wearable intelligent device, and is a general term of wearable devices, such as glasses, gloves, a watch, clothes, and shoes, that are developed by applying a wearable technology to intelligent designs of daily wear. The wearable device is a portable device that can be directly worn on a body or integrated into clothes or accessories of a user. Wearable devices are not only hardware devices, and can implement powerful functions through software support, data interaction, and cloud interaction. In a broad sense, wearable intelligent devices include a full-featured and large-size device that can implement complete and partial functions without depending on a smartphone, for example, a smart watch or smart glasses, and a device that focuses on only one type of application function and needs to work with another device like a smartphone, for example, various smart bands or smart jewelry for physical sign monitoring.

As an example instead of a limitation, in embodiments of this application, the terminal device may alternatively be a terminal device in machine-type communication (machine-type communication, MTC). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle may implement the method provided in this application by using the vehicle-mounted module, vehicle-mounted assembly, vehicle-mounted component, vehicle-mounted chip, vehicle-mounted unit, or the like that is built in the vehicle. Therefore, embodiments of this application may also be applied to an internet of vehicles, for example, a vehicle-to-everything (vehicle-to-everything, V2X), a long term evolution-vehicle (long term evolution-vehicle, LTE-V), or a vehicle-to-vehicle (vehicle-to-vehicle, V2V) technology.

A network device in this application may be a device communicating with the terminal device. The network device may also be referred to as an access network device or a radio access network device, and may be a transmission reception point (transmission reception point, TRP), or may be an evolved NodeB (evolved NodeB, eNB or eNodeB) in an LTE system, or may be a home base station (for example, a home evolved NodeB, or a home NodeB, HNB), or a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a metro base station, a micro base station, a pico base station, a femto base station, or the like. This is not limited in this application.

The following describes some technical terms in this application.

1. Reference signal: is an uplink reference signal sent by a terminal device to a network device. After receiving the reference signal, the network device may obtain, based on the reference signal, channel information of an uplink channel from the terminal device to the network device.

2. Reference signal port: may be used to carry a reference signal resource. Each reference signal port corresponds to one reference signal resource. Different reference signal ports may be multiplexed in a code division manner, a frequency division manner, a time division manner, or a space division manner. In an implementation, one reference signal resource may correspond to at least one reference signal port, for example, one, two, or four reference signal ports, and a specific time-frequency-code resource is correspondingly configured for each reference signal port. Usually, each reference signal port occupies a different time-frequency-code domain resource, to reduce mutual interference. Each reference signal port corresponds to a physical antenna or a virtual antenna of the terminal device.

3. Reference signal resource set (resource set): One reference signal resource set may include at least one reference signal resource. The statement one reference signal resource set includes at least one reference signal resource may mean that the network device configures the at least one reference signal resource for the reference signal resource set. In addition, the reference signal resource set may be configured for different purposes, for example, including but not limited to beam management, a codebook, non-code division, and antenna switching.

4. Antenna switching: For a TDD system, when performing channel measurement on a downlink channel, a network device may obtain uplink channel information based on a reference signal sent by a terminal, and obtain downlink channel information based on uplink and downlink reciprocity. When a quantity of transmit antennas of the terminal device is less than a quantity of receive antennas, the terminal device needs to perform antenna switching when sending the reference signal. When the quantity of transmit antennas of the terminal device is equal to the quantity of receive antennas, the terminal device does not need to perform antenna switching when sending the reference signal. For example, a quantity of antennas of the terminal device may be represented as NTMR, where N represents a quantity of transmit antennas, T represents transmit (transmit channels), M represents a quantity of receive antennas, and R represents receive (receive channels). If N is less than M, antenna switching needs to be performed in a process in which the terminal device sends the reference signal.

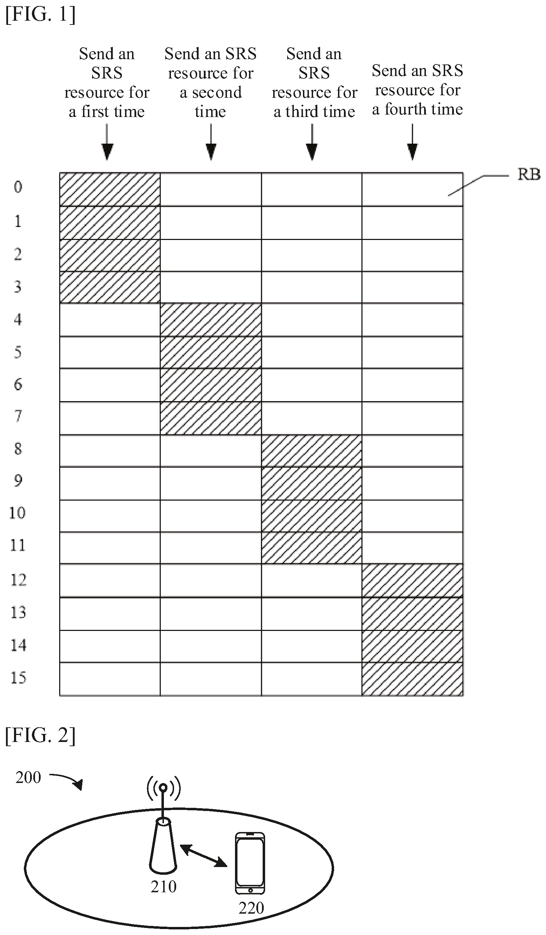

5. Measurement bandwidth and frequency hopping bandwidth of the reference signal: The measurement bandwidth of the reference signal is a total bandwidth used by the network device to perform channel measurement by using the reference signal. Each time the terminal device may send the reference signal resource in the entire measurement bandwidth, or may send the reference signal resource in part of the measurement bandwidth. When the terminal device sends the reference signal resource only in the part of the measurement bandwidth, a length of the part of bandwidth used to send the reference signal resource each time is the frequency hopping bandwidth. The terminal device sends reference signal resources in different frequency hopping bandwidths, so that the network device can obtain a channel corresponding to the entire measurement bandwidth of the reference signal. As shown in FIG. 1, one grid in the figure represents one subband (for example, may be one RB) in frequency domain, a measurement bandwidth is 16 RBs, and a frequency hopping bandwidth of a reference signal is 4 RBs. A first reference signal resource of a terminal device may be sent on an RB 0 to an RB 3, a second reference signal resource may be sent on an RB 4 to an RB 7, a third sent reference signal resource may be sent on an RB 8 to an RB 11, and a fourth sent reference signal resource may be sent on an RB 12 to an RB 15. In this way, the network device can complete measurement of the measurement bandwidth by using the reference signal resources sent for the four transmissions.

6. Time domain symbol (symbol): is a symbol included in a slot (slot). For example, one subframe may include 10 slots, and one slot may include 14 time domain symbols. Duration of each time domain symbol is related to a subcarrier spacing. When the subcarrier spacing becomes larger, the duration of each time domain symbol becomes shorter, and correspondingly, duration of a slot also becomes shorter.

For ease of understanding embodiments of this application, a communication system applicable to embodiments of this application is first described in detail with reference to FIG. 2.

FIG. 2 is a diagram of a communication system 200 to which embodiments of this application are applied. The communication system 200 may include at least one network device, for example, a network device 210 shown in FIG. 2, and the communication system 200 may further include at least one terminal device, for example, a terminal device 220 shown in FIG. 2. The network device 210 and the terminal device 220 may communicate with each other through a radio link. In a possible case, the network device 210 may be used as a transmit end, the terminal device 220 may be used as a receive end, and the network device 210 sends a signal to the terminal device 220. In another possible case, the network device 210 may be used as a receive end, the terminal device 220 may be used as a transmit end, and the terminal device 220 sends a signal to the network device 210.

FIG. 2 shows an example of one network device 210 and one terminal device 220. Optionally, the communication system 200 may further include a plurality of network devices and/or a plurality of terminal devices. The network device 210 may be a router, a base station, or the like. The terminal device 220 may be a mobile phone, a tablet computer, a smart band, or the like. This is not limited in embodiments of this application.

A plurality of antennas may be configured for each of the communication devices, for example, the network device 210 or the terminal device 220 in FIG. 2. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device 210 and the terminal device 220 may communicate with each other by using a multi-antenna technology.

Optionally, the communication system 200 may further include another network entity like a network controller or a mobility management entity. Embodiments of this application are not limited thereto.

It should be understood that the method provided in embodiments of this application is applicable to a plurality of communication systems including a 5G new radio (new radio, NR) system. The communication system 200 shown in FIG. 2 is merely an example, a specific architecture of the applicable system is not limited in this application, and quantities and forms of various devices included in the communication systems are not limited either.

Multiple-input multiple-output (multiple-user multiple-input multiple-output, MIMO) technology is widely used in communication systems to provide a high data transmission rate and improve communication quality. When the MIMO technology is used, a network device needs to precode data before sending the data to a terminal device. However, implementation of precoding is based on channel state information (channel state information, CSI). Usually, when there is reciprocity between an uplink channel and a downlink channel, for example, in a time division duplex (time division duplex, TDD) system, the network device may obtain CSI of the downlink channel over the uplink channel by using the reciprocity between the channels.

Currently, for a terminal device that supports NTMR, the network device may configure a reference signal resource for the terminal device, and the reference signal resource includes N or M reference signal ports. In this way, after the terminal device sends the reference signal resource to the network device, the network device may determine channel information of the N reference signal ports or channel information of the M reference signal ports based on the reference signal resource.

For example, the terminal device may send a channel sounding reference signal (sounding reference signal, SRS) resource to the network device. The network device receives the SRS resource from the terminal device, and may determine CSI of the uplink channel and the CSI of the downlink channel based on the SRS resource. However, when the terminal device has fewer transmit antennas than receive antennas, it is difficult for the network device to accurately obtain the CSI of the downlink channel based only on reference signals of a quantity of transmit antennas. Therefore, when the network device needs to perform channel measurement on the downlink channel, the terminal device needs to perform antenna switching in a process of sending the reference signal. The network device may configure at least one SRS resource for the terminal device, a total quantity of SRS ports included in the at least one SRS resource is the same as a quantity of receive antennas of the terminal device, and each of the SRS ports may correspond to a distinct antenna port of the terminal device, so that the terminal device can send the at least one reference signal resource through antenna ports corresponding to all the receive antennas.

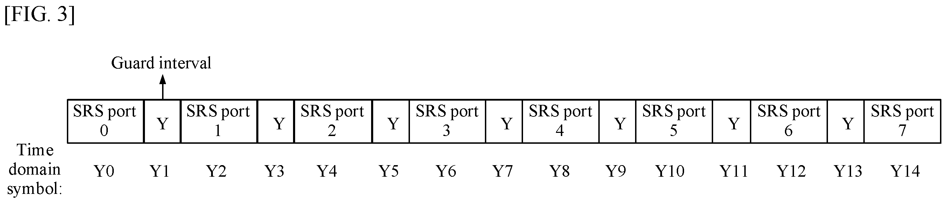

For example, as shown in FIG. 3, for a terminal device that supports 1T8R, the network device may configure eight SRS resources for the terminal device, and each of the eight SRS resources corresponds to one SRS port. In this case, the terminal device may send, on a different time domain symbol through each port, an SRS resource corresponding to the port. There is a guard interval (Y) between SRS resources sent for two consecutive transmissions. A process in which the terminal device sends the eight SRS resources is as follows: The terminal device sends, on a time domain symbol Y0 through an SRS port 0, one SRS resource corresponding to the SRS port 0, and remains silent on a time domain symbol Y1, that is, does not send the SRS resource; then sends, on a time domain symbol Y2 through an SRS port 1, one SRS resource corresponding to the SRS port 1, and remains silent on a time domain symbol Y3, that is, does not send the SRS resource; then sends, on a time domain symbol Y4 through an SRS port 2, one SRS resource corresponding to the SRS port 2, and remains silent on a time domain symbol Y5, that is, does not send the SRS resource; then sends, on a time domain symbol Y6 through an SRS port 3, one SRS resource corresponding to the SRS port 3, and remains silent on a time domain symbol Y7, that is, does not send the SRS resource; then sends, on a time domain symbol Y8 through an SRS port 4, one SRS resource corresponding to the SRS port 4, and remains silent on a time domain symbol Y9, that is, does not send the SRS resource; then sends, on a time domain symbol Y10 through an SRS port 5, one SRS resource corresponding to the SRS port 5, and remains silent on a time domain symbol Y11, that is, does not send the SRS resource; then sends, on a time domain symbol Y12 through an SRS port 6, one SRS resource corresponding to the SRS port 6, and remains silent on a time domain symbol Y13, that is, does not send the SRS resource; and then sends, on a time domain symbol Y14 through an SRS port 7, one SRS resource corresponding to the SRS port 7.

It may be understood that, in the example shown in FIG. 3, each SRS port corresponds to one of eight antenna ports of the terminal device. Therefore, the terminal device sequentially sends the eight SRS resources through the eight SRS ports, and the antenna ports corresponding to all receive antennas of the terminal device can be traversed.

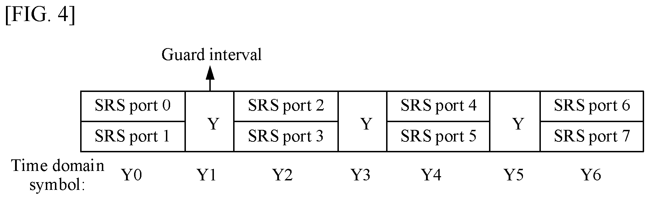

For another example, as shown in FIG. 4, for a terminal device that supports 2T8R, the network device may configure four SRS resources for the terminal device, and each SRS resource corresponds to two SRS ports. There is a guard interval (Y) between SRS resources sent for two consecutive transmissions. A process in which the terminal device sends the four SRS resources is as follows: The terminal device separately sends, on a time domain symbol Y0 through an SRS port 0 and an SRS port 1, one SRS resource corresponding to the SRS port 0 and the SRS port 1, and remains silent on a time domain symbol Y1, that is, does not send the SRS resource; then separately sends, on a time domain symbol Y2 through an SRS port 2 and an SRS port 3, one SRS resource corresponding to the SRS port 2 and the SRS port 3, and remains silent on a time domain symbol Y3, that is, does not send the SRS resource; then sends, on a time domain symbol Y4 through an SRS port 4 and an SRS port 5, one SRS resource corresponding to the SRS port 4 and the SRS port 5, and remains silent on a time domain symbol Y5, that is, does not send the SRS resource; and then sends, on a time domain symbol Y6 through an SRS port 6 and an SRS port 7, one SRS resource corresponding to the SRS port 6 and the SRS port 7.

It may be understood that, in the example shown in FIG. 4, each SRS port corresponds to one of eight receive antennas of the terminal device. Therefore, the terminal device sequentially sends the four SRS resources through the eight SRS ports, and all the receive antennas of the terminal device can be traversed.

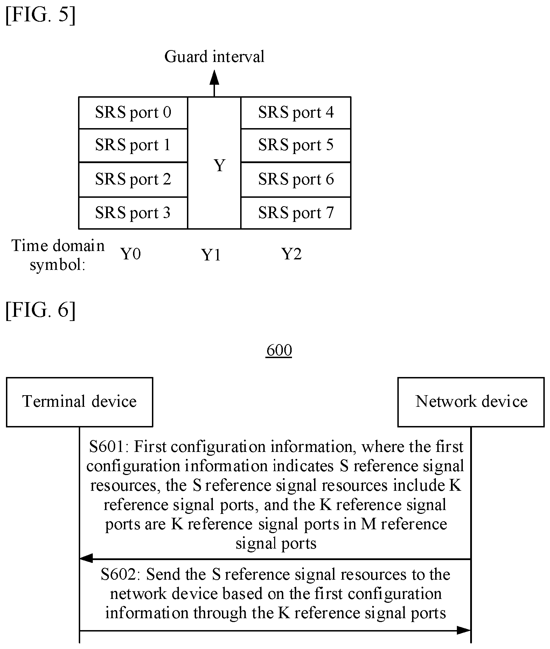

For another example, as shown in FIG. 5, for a terminal device that supports 4T8R, the network device may configure two SRS resources for the terminal device, and each SRS resource corresponds to four SRS ports. There is a guard interval (Y) between SRS resources sent for two consecutive transmissions. A process in which the terminal device sends the two SRS resources is as follows: The terminal device separately sends, on a time domain symbol Y0 through an SRS port 0, an SRS port 1, an SRS port 2, and an SRS port 3, one SRS resource corresponding to the SRS port 0, the SRS port 1, the SRS port 2, and the SRS port 3, and remains silent on a time domain symbol Y1, that is, does not send the SRS resource; and then separately sends, on a time domain symbol Y2 through an SRS port 4, an SRS port 5, an SRS port 6, and an SRS port 7, one SRS resource corresponding to the SRS port 4, the SRS port 5, the SRS port 6, and the SRS port 7.

It may be understood that, in the example shown in FIG. 5, each SRS port corresponds to one of eight antenna ports corresponding to receive antennas of the terminal device. Therefore, the terminal device sequentially sends the two SRS resources through the eight SRS ports, and all the receive antennas of the terminal device can be traversed.

It can be learned from the examples shown in FIG. 3 to FIG. 5 that a quantity of reference signal ports included in the reference signal resource configured by the network device for the terminal device is related to a quantity of antenna ports of the terminal device. For example, in an antenna switching scenario, the quantity of reference signal ports included in the reference signal configured by the network device for the terminal device is the same as a quantity of antenna ports of receive antennas of the terminal device, and the terminal device sends the reference signal resource through M reference signal ports of M receive antennas. However, with emergence of new network services such as augmented reality (augmented reality, AR), a user has an increasingly high requirement on a downlink service. To improve downlink service experience of the user, in a possible manner, a downlink receiving link gain is obtained by increasing a quantity of receive channels of the terminal device. As the quantity of receive channels of the terminal device increases, the network device needs to configure more reference signal resources for the terminal device. In addition, in one channel measurement process, the terminal device also needs to send more reference signal resources to the network device. Consequently, system overhead is high.

In addition, it can be learned from the examples shown in FIG. 3 to FIG. 5 that there is the guard interval between the reference signal resources sent for two consecutive transmissions by the terminal device. A quantity of transmit antenna channels of the terminal device is limited, and is usually less than the quantity of receive antennas of the terminal device. Therefore, the terminal device can send only part of the reference signal resource through the receive antenna at a time, so that when sending the reference signal resource, the terminal device needs to switch a transmit radio frequency link to different (groups of) receive antennas to complete signal sending. In addition, in this process, due to a limitation of hardware such as a power amplifier of the terminal device, a specific guard interval needs to be reserved for the terminal device to perform antenna switching, to ensure that the terminal device can normally perform sending on different channels.

Optionally, when two reference signal resources are transmitted in a same slot, the network device may configure a guard interval of Y symbols for the terminal device between sending of the two reference signal resources, and the terminal device does not transmit any signal on the Y symbols. When two reference signal resources are transmitted in two contiguous slots, if the terminal device can transmit the reference signal resources on all symbols in one slot, there is a guard interval of Y symbols between the last OFDM symbol occupied by the reference signal resource in a 1st slot and the first OFDM symbol occupied by the reference signal resource in a 2nd slot. For a specific value of the guard interval, refer to Table 1, where $\mu$ represents a subcarrier spacing configuration, $\Delta f$ represents a subcarrier spacing, and the guard interval is a quantity of symbols. For example, if the guard interval is 1, it indicates that the guard interval is one symbol.

Table 1: Minimum guard interval between two SRS resources in an SRS resource set used for antenna switching

| $\mu$ | $\Delta f = 2^{\mu} \times 15/\text{kHz}$ | Guard interval |
|---|---|---|
| 0 | 15 | 1 |
| 1 | 30 | 1 |
| 2 | 60 | 1 |
| 3 | 120 | 2 |

(continued)

| μ | Δf=2^μx15/kHz | Guard interval |
|---|---|---|
| 5 | 480 | 7 |
| 6 | 960 | 14 |

It can be learned that, as the quantity of antenna ports of the terminal device increases, the network device needs to configure more reference signal resources for the terminal device, so that in one channel measurement process, the terminal device needs to send more reference signal resources to the network device, resulting in high system overhead. In addition, in the antenna switching scenario, the guard interval required for sending, by the terminal device, the reference signal resource configured by the network device increases linearly, which results in a large channel measurement delay.

To resolve the foregoing technical problem, this application provides a signal transmission method and apparatus. For a terminal device that supports NTMR, a network device configures S reference signal resources for the terminal device, and the S reference signal resources includes K reference signal ports. In an antenna switching scenario, by setting K to an integer less than M, the terminal device can send the S reference signal resources to the network device through the K reference signal ports. This allows the network device to obtain channel information of the K reference signal ports, and further determine channel information of M reference signal ports based on correlation between the M reference signal ports and the channel information of the K reference signal ports. Compared with a case in which the network device configures, for the terminal device, reference signal resources corresponding to the M reference signal ports, and the terminal device sends, to the network device through the M reference signal ports, the reference signal resources corresponding to the M reference signal ports, system overhead is lower. In addition, a guard interval for sending the S reference signal resources by the terminal device to the network device through the K reference signal ports is also shorter.

In addition, in a non-antenna switching scenario, by setting K to an integer less than N, the terminal device can send the S reference signal resources to the network device through the K reference signal ports. This allows the network device to obtain the channel information of the K reference signal ports, and further determine channel information of N reference signal ports based on correlation between the N reference signal ports and the channel information of the K reference signal ports. Compared with a case in which the network device configures, for the terminal device, reference signal resources corresponding to the N reference signal ports, and the terminal device sends, to the network device through the N reference signal ports, the reference signal resources corresponding to the N reference signal ports, system overhead is lower.

The following describes in detail the signal transmission method in this application with reference to FIG. 6 to FIG. 14. Embodiments shown in this application show the signal transmission method provided in this application from a perspective of device interaction. Specific forms and quantities of shown devices are merely examples, and should not constitute any limitation on implementation of the method provided in this application. The following describes in detail the signal transmission method in embodiments of this application by using an example in which a terminal device and a network device are execution bodies.

It should be understood that the terminal device may be a terminal device, or may be a chip, a chip system, or a processor that supports the terminal device in implementing the signal transmission method, or may be a logical module or software that can implement all or part of the terminal devices. The network device may be a network device, or may be a chip, a chip system, or a processor that supports the network device in implementing the signal transmission method, or may be a logical module or software that can implement all or part of the network devices. This is not specifically limited in this application.

FIG. 6 is a schematic flowchart of a signal transmission method 600 according to an embodiment of this application. The method is applied to a system including a terminal device and a network device, for example, the system 200. The method 600 includes the following steps.

S601: The network device sends first configuration information to the terminal device, where the first configuration information indicates S reference signal resources, the S reference signal resources include K reference signal ports, the K reference signal ports are K reference signal ports in M reference signal ports, each of the M reference signal ports corresponds to a distinct antenna port of the terminal device, and S, K, and M are positive integers. Correspondingly, the terminal device receives the first configuration information from the network device.

The first configuration information may be radio resource control (Radio Resource Control, RRC) information or other higher layer information. A reference signal may be but is not limited to one or both of the following: a sounding reference signal (sounding reference signal, SRS) and a demodulation reference signal (demodulation reference signal, DMRS). The statement the S reference signal resources include the K reference signal ports may be understood as that a total quantity of reference signal ports included in the S reference signal resources is K. For example, S may be 2, and K may be 4. In this case, the two reference signal resources include the four reference signal ports, and each of the two reference signal resources may include two of the four reference signal ports. Because one reference signal resource usually includes one or more reference signal ports, S may be an integer less than or equal to K. The statement the K reference signal ports are the K reference signal ports in the M reference signal ports may be understood as that the K reference signal ports are a subset of the M reference signal ports. For example, the M reference signal ports are a reference signal port 1, a reference signal port 2, a reference signal port 3, and a reference signal port 4, and the K reference signal ports may be the reference signal port 1 and the reference signal port 2. The M reference signal ports may be understood as M reference signal ports corresponding to channel information of M channels that need to be measured by the network device. For example, the network device needs to measure channel information corresponding to the four reference signal ports: the reference signal port 1, the reference signal port 2, the reference signal port 3, and the reference signal port 4. In this case, the network device may configure, for the terminal device based on the first configuration information, a reference signal resource corresponding to a subset of the four reference signal ports. In addition, port identifiers of reference signal ports included in any two of the S reference signal resources may be the same or different. For example, the S reference signal resources include a reference signal resource 1 and a reference signal resource 2, identifiers of reference signal ports included in the reference signal resource 1 are 1 and 2, and port identifiers of reference signal ports included in the reference signal resource 2 are also 1 and 2. However, when the terminal device sends the reference signal resource 1 and the reference signal resource 2, antenna ports that are of the terminal device and that are associated with the reference signal ports included in the reference signal resource 1 are different from antenna ports that are of the terminal device and that are associated with the reference signal ports included in the reference signal resource 2. To be specific, the reference signal ports that correspond to 1 and 2 and that are included in the reference signal resource 1 may be associated with an antenna port 1 and an antenna port 2 of the terminal device, and the reference signal ports that correspond to 1 and 2 and that are included in the reference signal resource 2 may be associated with an antenna port 3 and an antenna port 4 of the terminal device.

In addition, a different antenna port of the terminal device may be an antenna port of a physical antenna of the terminal device. The statement each of the M reference signal ports corresponds to a distinct antenna port of the terminal device may be understood as that any two of the M reference signal ports are associated with different antenna ports of the terminal device. For example, for the reference signal port 1, the reference signal port 2, the reference signal port 3, and the reference signal port 4, the reference signal port 1 may be associated with the antenna port 1 of the terminal device, the reference signal port 2 may be associated with the antenna port 2 of the terminal device, the reference signal port 3 may be associated with the antenna port 3 of the terminal device, and the reference signal port 4 may be associated with the antenna port 4 of the terminal device.

Optionally, when the terminal device supports NTMR, M is a quantity of receive antennas of the terminal device, and the first configuration information further includes information indicating that the S reference signal resources are used for antenna switching.

Optionally, the first configuration information includes a first reference signal resource set, and the first reference signal resource set includes information indicating the S reference signal resources. In addition, the first reference signal resource set may further include the information indicating that the S reference signal resources are used for antenna switching. In addition, when the first reference signal resource set includes the information indicating that the S reference signal resources are used for antenna switching, M is the quantity of receive antennas of the terminal device.

S602: The terminal device sends the S reference signal resources to the network device based on the first configuration information through the K reference signal ports. Correspondingly, the network device receives the S reference signal resources from the terminal device, and obtains channel information of the K reference signal ports corresponding to the S reference signal resources.

It should be understood that each of the K reference signal ports is associated with one antenna port of a physical antenna of the terminal device, in other words, the K reference signal ports may be associated with K antenna ports of the terminal device. For example, when M is the quantity of physical receive antennas of the terminal device, that is, the K reference signal ports are associated with antenna ports corresponding to K receive antennas of the terminal device, each of the K reference signal ports is associated with an antenna port of one physical receive antenna of the terminal device.

In an antenna switching scenario, K is an integer less than or equal to M, and the terminal device sends the S reference signal resources to the network device through the K reference signal ports in the M reference signal ports. Optionally, after obtaining the channel information of the K reference signal ports corresponding to the S reference signal resources, the network device may determine channel information of the M reference signal ports based on correlation between the channels of the M reference signal ports and the channel information of the K reference signal ports.

In a possible implementation, M may alternatively be a quantity of physical transmit antennas of the terminal device, and each of the M physical transmit antennas includes one antenna port. In this case, each of the K reference signal ports is associated with one of M antenna ports of the M physical transmit antennas.

According to the signal transmission method in this application, for the terminal device that supports NTMR, the network device configures S reference signal resources for the terminal device, and the S reference signal resources include K reference signal ports. In an antenna switching scenario, by setting K to an integer less than M, the terminal device can send the S reference signal resources to the network device through the K reference signal ports. This allows the network device to obtain the channel information of the K reference signal ports, and further determine the channel information of the M reference signal ports based on the correlation between the M reference signal ports and the channel information of the K reference signal ports. Compared with a case in which the network device configures, for the terminal device, reference signal resources corresponding to the M reference signal ports, and the terminal device sends, to the network device through the M reference signal ports, the reference signal resources corresponding to the M reference signal ports, the proposed method of sending, by the terminal device, the S reference signal resources to the network device through the K reference signal ports reduces system overhead. In addition, because the S reference signal resources are a subset of the reference signal resources corresponding to the M reference signal ports, a guard interval for sending the S reference signal resources by the terminal device is also shorter than that for sending the reference signal resources corresponding to the M reference signal ports.

The following describes in detail a reference signal transmission manner in the antenna switching scenario, that is, when M is the quantity of physical transmit antennas of the terminal device.

In an optional embodiment, each of the S reference signal resources is sent on a different time domain symbol, and each of the S reference signal resources includes K/S reference signal ports, where K is an integer multiple of S, and / indicates division.

The statement each of the S reference signal resources is sent on the different time domain symbol means that each of the S reference signal resources is sent on a different time domain symbol in a unit time unit, and the unit time unit may also be understood as a slot. Each unit time unit includes a plurality of time domain symbols. K/S may be understood as a ratio of K to S, and K/S is a positive integer. The statement each of the S reference signal resources includes the K/S reference signal ports means that each of the S reference signal resources includes a same quantity of reference signal ports, and K/S reference signal ports included in different reference signal resources may be the same or different. For example, it is assumed that K is 4, S is 2, the two reference signal resources are a reference signal resource 1 and a reference signal resource 2, and the four reference port resources are a reference signal port 1, a reference signal port 2, a reference signal port 3, and a reference signal port 4. In this case, the reference signal resource 1 may include the reference signal port 1 and the reference signal port 2, and the reference signal resource 2 may include the reference signal port 3 and the reference signal port 4. In addition, when K/S is greater than 1, K/S reference signal ports included in each reference signal resource are different K/S reference signal ports. For example, for the reference signal resource 1, the reference signal resource 1 may include the reference signal port 1 and the reference signal port 2, and the reference signal port 1 is a reference signal port different from the reference signal port 2.

It should be understood that, when S=1, the reference signal resource is sent on one time domain symbol.

Optionally, each of the S reference signal resources includes a time domain symbol corresponding to each reference signal resource. In this way, the terminal device may determine, based on the time domain symbol corresponding to each reference signal resource, the time domain symbol used to send each reference signal resource.

Optionally, there is a time interval between time domain symbols corresponding to any two of the S reference signal resources, and the time interval is greater than or equal to a first interval Y.

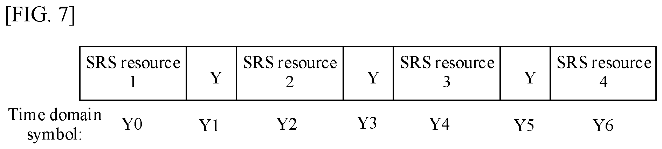

The first interval Y may be at least one time domain symbol. The time interval may be understood as the at least one time domain symbol. To be specific, there is at least one time domain symbol between two time domain symbols corresponding to any two of the S reference signal resources sent by the terminal device. In addition, in a process in which the terminal device sends the S reference signal resources, time intervals between time domain symbols corresponding to two reference signal resources that are sent for two consecutive transmissions may both be the first interval Y. For example, as shown in FIG. 7, the S reference signal resources include an SRS resource 1, an SRS resource 2, an SRS resource 3, and an SRS resource 4; and the terminal device sends the SRS resource 1 on a time domain symbol Y0, sends the SRS resource 2 on a time domain symbol Y2, sends the SRS resource 3 on a time domain symbol Y4, and sends the SRS resource 4 on a time domain symbol Y6. In this case, there are first intervals Y between the time domain symbol Y0 and the time domain symbol Y2, between the time domain symbol Y2 and the time domain symbol Y4, and between the time domain symbol Y4 and the time domain symbol Y6.

For the K reference signal ports in the M reference signal ports, the K reference signal ports may be indicated in three different manners.

Manner 1: The first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

The statement the at least one index indicates the K reference signal ports may be understood as that the at least one index indicates that the K reference signal ports are the K reference signal ports in the M reference signal ports.

It should be understood that the plurality of groups of reference signal ports are obtained by grouping the M reference signal ports. Quantities of reference signal ports included in the plurality of groups of reference signal ports may be the same, and reference signal ports included in different groups of reference signal ports may not be completely the same. For example, it is assumed that the M reference port resources are a reference signal port 1, a reference signal port 2, a reference signal port 3, and a reference signal port 4, and the plurality of groups of reference signal ports may be two groups of reference signal ports, where one group of reference signal ports includes the reference signal port 1 and the reference signal port 2, and the other group of reference signal ports includes the reference signal port 3 and the reference signal port 4. Alternatively, the plurality of groups of reference signal ports may be three groups of reference signal ports, where a $1^{st}$ group of reference signal ports includes the reference signal port 1 and the reference signal port 2, a $2^{nd}$ group of reference signal ports includes the reference signal port 2 and the reference signal port 3, and a $3^{rd}$ group of reference signal ports includes the reference signal port 3 and the reference signal port 4.

A quantity of the plurality of indexes may be the same as a quantity of the plurality of groups of reference signal ports. The index may be an integer, for example, may be 0, 1, 2, 3, or 4. One index may correspond to port identifiers of one or more reference signal ports. For example, it is assumed that the first correspondence is represented in a form of a preset table. For a 1T4R terminal device, the first correspondence may be shown in Table 2, where an index 0 corresponds to a reference signal port 0 and a reference signal port 1, and an index 1 corresponds to a reference signal port 2 and a reference signal port 3. In this case, the information indicating the S reference signal resources may be the index. For example, if the first configuration information includes the index 0, the terminal device may determine that the S reference signal resources need to be sent through the reference signal port 0 and the reference signal port 1.

Table 2

| Index | Identifier of a reference signal port |
|-------|---------------------------------------|
| 0 | 0, 1 |
| 1 | 2, 3 |

For another example, it is assumed that the first correspondence is represented in a form of a preset table. For a 2T8R terminal device, the first correspondence may be shown in Table 3, where an index 0 corresponds to a reference signal port 0, a reference signal port 1, a reference signal port 4, and a reference signal port 5; and an index 1 corresponds to a reference signal port 2, a reference signal port 3, a reference signal port 6, and a reference signal port 7. In this case, the information indicating the S reference signal resources may be the index. For example, if the first configuration information includes the index 0, the terminal device may determine, based on 0, that the S reference signal resources need to be sent through the reference signal port 0, the reference signal port 1, the reference signal port 4, and the reference signal port 5.

Table 3

| Index | Identifier of a reference signal port |
|-------|---------------------------------------|
| 0 | 0, 1, 4, 5 |
| 1 | 2, 3, 6, 7 |

Optionally, the first configuration information includes a first information element and a second information element, the first information element indicates the S reference signal resources, and the second information element indicates the at least one index.

It should be understood that the network device may configure the S reference signal resources and the at least one index by using a same information element, or may configure the S reference signal resources and the at least one index by using different information elements. This is not specifically limited in this application.

Optionally, the method 600 further includes: The network device sends second configuration information to the terminal device, where the second configuration information indicates the at least one index. Correspondingly, the terminal device receives the second configuration information from the network device.

It should be understood that the second configuration information and the first configuration information may be same information, or may be different information. To be specific, the network device may indicate the S reference signal resources and the at least one index via same signaling, or may indicate the S reference signal resources and the at least one index via different signaling. This is not specifically limited in this application.

Optionally, in Manner 1, the first correspondence may be configured by the network device via signaling, or the first correspondence may be specified in a protocol.

Manner 2: The first configuration information includes port identifiers of the K reference signal ports.

It should be understood that, that the statement the first configuration information includes the port identifiers of the K reference signal ports means that the network device indicates, by using the port identifiers of the K reference signal ports, that the K reference signal ports are the K reference signal ports in the M reference signal ports.

Each of the K reference signal ports corresponds to one port identifier. The port identifiers of the K reference signal ports are K port identifiers in port identifiers of the M reference signal ports. The port identifiers of the M reference signal ports may be configured by the network device via signaling, or the port identifiers of the M reference signal ports may be specified in a protocol.

Optionally, the first configuration information includes a first information element and a second information element, the first information element indicates the S reference signal resources, and the second information element indicates the port identifiers of the K reference signal ports.

It should be understood that the network device may configure the S reference signal resources and the port identifiers of the K reference signal ports by using a same information element, or may configure the S reference signal resources and the port identifiers of the K reference signal ports by using different information elements. This is not specifically limited in this application.

Optionally, the method 600 further includes: The network device sends second configuration information to the terminal device, where the second configuration information indicates the port identifiers of the K reference signal ports. Correspondingly, the terminal device receives the second configuration information from the network device.

It should be understood that the second configuration information and the first configuration information may be same information, or may be different information. To be specific, the network device may indicate the S reference signal resources and the port identifiers of the K reference signal ports via same signaling, or may indicate the S reference signal resources and the port identifiers of the K reference signal ports via different signaling. This is not specifically limited in this application.

Manner 3: The first configuration information includes a bitmap, and the bitmap indicates the K reference signal ports.

It should be understood that, the statement the bitmap indicates the K reference signal ports may be understood as that the bitmap indicates that the K reference signal ports are the K reference signal ports in the M reference signal ports.

It should be understood that the bitmap indicating the K reference signal ports includes M bits, the M bits of the bitmap indicating the K reference signal ports correspond one-to-one to the M reference signal ports, and each bit indicates whether its corresponding reference signal port is selected. For example, in the bitmap, a value of 0 may mean a port is not selected and 1 may mean it is selected; alternatively, 0 may mean a port is selected and 1 may mean it is not selected.

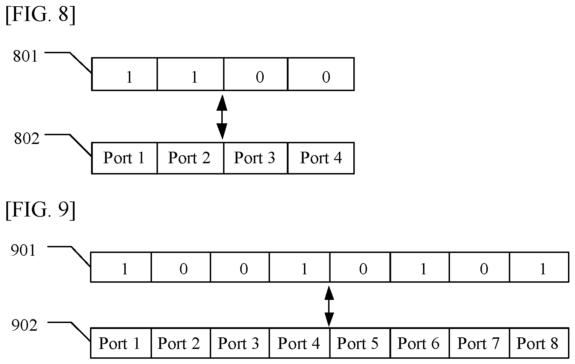

For example, as shown in FIG. 8, it is assumed that M reference signal ports 802 include a reference signal port 1, a reference signal port 2, a reference signal port 3, and a reference signal port 4. In this case, a bitmap 801 indicating the K reference signal ports includes 4 bits. It is assumed that 1 indicates being selected, and 0 indicates not being selected. In this case, when the first configuration information includes 1100, that is, when the bitmap 801 indicating locations of the K reference signal ports is 1100, it may indicate that the K reference signal ports are the reference signal port 1 and the reference signal port 2.

For another example, as shown in FIG. 9, it is assumed that M reference signal ports 902 include a reference signal port 1, a reference signal port 2, a reference signal port 3, a reference signal port 4, a reference signal port 5, a reference signal port 6, a reference signal port 7, and a reference signal port 8. In this case, a bitmap 901 indicating locations of the K reference signal ports includes 8 bits. It is assumed that 1 indicates being selected, and 0 indicates not being selected. In this case, when the first configuration information includes 10010101, that is, when the bitmap 901 indicating the locations of the K reference signal ports is 10010101, it may indicate that the K reference signal ports are the reference signal port 1, the reference signal port 4, the reference signal port 6, and the reference signal port 1.

Optionally, the first configuration information includes a first information element and a second information element, the first information element indicates the S reference signal resources, and the second information element indicates the bitmap.

It should be understood that the network device may configure the S reference signal resources and the bitmap by using a same information element, or may configure the S reference signal resources and the bitmap by using different information elements. This is not specifically limited in this application.

Optionally, the method 600 further includes: The network device sends second configuration information to the terminal device, where the second configuration information indicates the bitmap. Correspondingly, the terminal device receives the second configuration information from the network device.

It should be understood that the second configuration information and the first configuration information may be same information, or may be different information. To be specific, the network device may indicate the S reference signal resources and the bitmap via same signaling, or may indicate the S reference signal resources and the bitmap via different signaling. This is not specifically limited in this application.

In Manner 3, the bitmap indicating the K reference signal ports may be determined by using the following formula: $B=f_1(M, K)$, where $f_1(M, K)$ is a function value that varies with M and K, and B is the bitmap indicating the K reference signal ports.

It should be understood that, for B generated based on $f_1(M, K)$, B may include M bits, and B includes K 1s or K 0s.

When B includes K 1s, a value of 1 may indicate being selected. When B includes K 0s, a value of 0 may indicate being selected. The K 1s or the K 0s may be located anywhere within B.

Optionally, bitmaps corresponding to K reference signal ports included in S reference signal resources sent by the terminal device in different unit time units may be the same or may be different. When the bitmaps are different, a bitmap corresponding to K reference signal ports included in a subsequently sent S reference signal resources may be determined by adding an offset value to each bit in an initial bitmap based on the initial bitmap. The initial bitmap may be bit locations of the K reference signal ports included in the S reference signal resources indicated in the first configuration information. The offset value is a change amount used to make each bit in the bitmap change, for example, may be 1.

Optionally, the bitmap may alternatively be determined based on location indexes of K largest random numbers in M random numbers, where locations indicated by the location indexes of the K largest random numbers may be set to 0, a remaining location is set to 1, and 0 indicates being selected. Alternatively, locations indicated by the location indexes of the K largest random numbers may be set to 1, a remaining location is set to 0, and 1 indicates being selected. For example, a quantity of location indexes is M, and each location index corresponds to one bit. It is assumed that M is 4, K is 2, and the location indexes are 0, 1, 2, and 3. In this case, random numbers generated at four locations corresponding to the four location indexes are 7, 8, 6, and 5. Bits corresponding to location indexes of two largest random numbers are set to 1, where 1 indicates being selected, and a generated bitmap is 1100.

Optionally, the bitmap may alternatively be determined based on location indexes of K smallest random numbers in the M random numbers. This determining manner is similar to the determining manner based on the location indexes of the K largest random numbers in the M random numbers. For details, refer to the foregoing descriptions. Details are not described herein again.

In addition, the information indicating the K reference signal ports may alternatively be determined in the following manner.

In an optional embodiment, K reference signal ports included in S reference signal resources are different across G consecutive transmissions by the terminal device, and G is an integer greater than or equal to 2.

It should be understood that the G consecutive transmissions means adjacent G transmissions in the chronological sequence of sending the S reference signal resources. A single transmission is defined as the terminal device completing the sending of S reference signal resources. After the initial transmission, the following G-1 consecutive transmissions are collectively referred to as G consecutive transmissions. Each time the terminal device transmits a reference signal resource, it transmits the S reference signal resources configured in the first configuration information. However, for at least two of the G consecutive transmissions for the S reference signal resources, K reference signal ports included in the S reference signal resources of one transmission are different from K reference signal ports included in the S reference signal resources of another transmission.

For example, the S reference signal resources include a reference signal resource 1; and the M reference signal ports include a reference signal port 1, a reference signal port 2, a reference signal port 3, a reference signal port 4, a reference signal port 5, a reference signal port 6, a reference signal port 7, and a reference signal port 8. It is assumed that T is 3. The terminal device sends the reference signal resource 1 through the reference signal port 1 and the reference signal port 2 for a first transmission, sends the reference signal resource 1 through the reference signal port 3 and the reference signal port 4 for a second time, and sends the reference signal resource 1 through the reference signal port 7 and the reference signal port 8 for a third time.

Optionally, G may be an integer obtained by rounding up a ratio of M to K. The statement G is the integer obtained by rounding up the ratio of M to K may be understood as follows: When the ratio of M to K is an integer, G is the ratio of M to K; or when the ratio of M to K is not an integer, G is a larger one in two integers that are closest to the ratio of M to K. For example, if M is 4 and K is 2, G is 2; or if M is 8 and K is 3, G is 3. According to such a technical solution, the M reference signal ports can be traversed based on the reference signal resource sent for the G consecutive transmissions, that is, the M antenna ports of the terminal device are traversed, so that the network device can obtain the channel information of the M reference signal ports based on the reference signal resource received for the G consecutive transmissions.

For example, the S reference signal resources include a reference signal resource 1; the M reference signal ports include a reference signal port 1, a reference signal port 2, a reference signal port 3, a reference signal port 4, a reference signal port 5, a reference signal port 6, a reference signal port 7, and a reference signal port 8; and T is 4. The terminal device sends the reference signal resource 1 through the reference signal port 1 and the reference signal port 2 for a first transmission, sends the reference signal resource 1 through the reference signal port 3 and the reference signal port 4 for a second time, sends the reference signal resource 1 through the reference signal port 5 and the reference signal port 6 for a third time, and sends the reference signal resource 1 through the reference signal port 7 and the reference signal port 8 for a fourth time. In this way, the network device may determine channel information of the eight reference signal ports based on the reference signal resource sent for the four consecutive transmissions.

In a possible implementation, a reference signal port included in S reference signal resources sent for an $i^{th}$ transmission among the G consecutive transmissions is determined by using the following formula: $p_i = f_2(p_1, p_{offset}, i$ is

information indicating the reference signal port included in the S reference signal resources sent for the $i^{th}$ transmission, $f_2$ ($p_1$, $p_{offset}$, $i_1$, $p_{offset}$, and i, $p_1$ is information indicating a reference signal port included in S reference signal resources sent for a first transmission, $p_{offset}$ is an offset value of the information indicating the reference signal port, and i is a positive integer greater than or equal to 2 and less than or equal to G.

It should be understood that $p_i$ may be, for example, an index, or may be other information indicating the reference signal port. A quantity of reference signal ports included in the S reference signal resources sent for the $i^{th}$ transmission may be K.

For example, $p_i$ is an index, and it is assumed that $p_1$ is 1. In this case, an index of the reference signal port corresponding to the S reference signal resources sent by the terminal device for the first time is 1. If the offset value of the information indicating the reference signal port is 1, an index of a reference signal port corresponding to S reference signal resources sent for a second time may be 2.

For another example, $p_i$ may be a set of port identifiers of K reference signal ports, and it is assumed that $p_1$ is {0, 2, 4, 6}. In this case, identifiers of four reference signal ports corresponding to eight reference signal resources sent by the terminal device for the first time are {0, 2, 4, 6}. If the offset value of the information indicating the reference signal port is 1, an index of reference signal ports corresponding to S reference signal resources sent for the second time may be {1, 3, 5, 7}, an index of reference signal ports corresponding to S reference signal resources sent for the third time may be {2, 4, 6, 0}, and the rest may be deduced by analogy.

For still another example, $p_i$ may be a bitmap, and it is assumed that $p_1$ is 0110. In this case, identifiers of reference signal ports corresponding to S reference signal resources sent by the terminal device for the first time are {1, 2}. If the offset value of the information indicating the reference signal port is 1, it indicates that the bitmap is cyclically shifted leftward by 1 bit or cyclically shifted rightward by 1 bit. Optionally, when it is indicated that the bitmap is cyclically shifted rightward by 1 bit, an index of reference signal ports corresponding to S reference signal resources sent for the second time may be {2, 3}, an index of reference signal ports corresponding to S reference signal resources sent for the third time may be {3, 0}, an index of reference signal ports corresponding to S reference signal resources sent for the fourth time may be {0, 1}, and the rest may be deduced by analogy.

Optionally, the reference signal port corresponding to the S reference signal resources sent for the $i^{th}$ transmission may be determined by using the following formula: $p_i = (p_1 + (i-1) \times p_{offset}) \bmod I$. Herein, mod is a modulo function, i is an integer greater than or equal to 2, and I is a quantity of pieces of information indicating the reference signal port. For example, when the information indicating the reference signal port is an index, I may be a quantity of indexes, that is, the quantity of the plurality of indexes included in the first correspondence.

The offset value ($p_{offset}$) of the information indicating the reference signal port may be specified in a protocol, or may be configured by the network device via signaling, or may be randomly generated.

Optionally, $p_{offset}$ may be determined by using the following formula: $p_{offset} = c\left( N_{slot}^{frame,\mu} n_1 + s - T_{offset} \right)$, where c() is a pseudo-random sequence, $N_{slot}^{frame}$ is a quantity of slots included in each frame when a subcarrier spacing is $\mu$, $n_i$ is a system frame number, s is a slot number in a frame when the subcarrier spacing is $\mu$, and $T_{offset}$ is a period offset of the information indicating the reference signal port.

When the information indicating the K reference signal ports is an index, that is, in Manner 1, T is the integer obtained by rounding up the ratio of M to K, among the G consecutive transmissions, an index of a port corresponding to S reference signal resources sent for an $x^{th}$ time is determined by using the following formula, and x is an integer greater than 1 and less than or equal to T:

$$j = ((N_{slot}^{frame} \times n_1 + s - T_{offset}) / T_{SRS} + j_0) \bmod I$$

Herein, $N_{slot}^{frame}$ is the quantity of slots included in each frame when the subcarrier spacing is $\mu$, $n_1$ is the system frame number, s is the slot number in the frame when the subcarrier spacing is $\mu$, $T_{offset}$ is the period offset of the index of the reference signal port, $T_{SRS}$ represents a sending period of the reference signal resource, $j_0$ represents an index of K reference signal ports used to send S reference signal resources for a first transmission, and I is the quantity of the plurality of indexes.

It should be understood that mod may be understood as the modulo function, and $j_0$ may be understood as the index of the K reference signal ports included in the S reference signal resources indicated in the first configuration information. According to the foregoing formula, in a process in which the terminal device sends the reference signal resource within the T consecutive transmissions based on a second period, the determined index of the reference signal port corresponding to the S reference signal resources sent for the $x^{th}$ time is different from indexes of reference signal ports corresponding to S reference signal resources sent for a first transmission to an $(x-1)^{th}$ transmission. For example, it is assumed that the plurality of indexes include 0 and 1. In this case, in a process of sending S reference signal resources for two consecutive transmissions, if an index of a reference signal port corresponding to S reference signal resources sent for a first transmission is 0, an index that is of a reference signal port corresponding to S reference signal resources sent for a second time and that is determined by the terminal device according to the foregoing formula is an index 1.

Optionally, the foregoing formula may be configured by the network device via signaling, or the foregoing formula may be specified in a protocol.

In addition, in addition to the S reference signal resources, the network device may further configure P reference signal resources for the terminal device. Details are as follows.

In an optional embodiment, the first configuration information further includes information used to configure the P reference signal resources, the P reference signal resources include the M reference signal ports, and P is a positive integer; and the method 600 further includes: The terminal device sends the P reference signal resources to the network device through the M reference signal ports; and correspondingly, the network device receives the P reference signal resources from the terminal device, and obtains the channel information of the M reference signal ports corresponding to the P reference signal resources.

It should be understood that, based on the first configuration information, the network device configures, for the terminal device, the P reference signal resources corresponding to the M reference signal ports and the S reference signal resources corresponding to the K reference signal ports, and the K reference signal ports are a subset of the M reference signal ports, and the S reference signal resources are a subset of the P reference signal resources. When the terminal device sends the S reference signal resources to the network device through the K reference signal ports, the network device may obtain the channel information of the K reference signal ports based on the S reference signal resources from the terminal device. When the terminal device sends the P reference signal resources to the network device through the M reference signal ports, the network device may obtain the channel information of the M reference signal ports based on the P reference signal resources from the terminal device.

In a possible implementation, an association relationship between the K reference signal ports and the antenna ports of the terminal device is the same as an association relationship between the M reference signal ports and the antenna ports of the terminal device.

It should be understood that the antenna port of the terminal device may be understood as the antenna port of the physical receive antenna of the terminal device. For the NTMR terminal device, the quantity of physical receive antennas of the terminal device is M. When the terminal device sends the S reference signal resources through the K reference signal ports or sends the P reference signal resources through the M reference signal ports, each reference signal port is associated with one antenna port of the terminal device. The statement a mapping relationship between the K reference signal ports and the physical antennas of the terminal device is the same as a mapping relationship between the M reference signal ports and the physical antennas of the terminal device may be understood as that the association relationship between the K reference signal ports and the K antenna ports of the terminal device belongs to the association relationship between the M reference signal ports and the M antenna ports of the terminal device. For example, it is assumed that M is 4, P is 2, K is 2, and S is 1. In this case, when the terminal device sends two reference signal resources to the network device through four reference signal ports, a reference signal port 1 in the four reference signal ports is associated with an antenna port 1 of the terminal device, a reference signal port 2 is associated with an antenna port 2 of the terminal device, a reference signal port 3 is associated with an antenna port 3 of the terminal device, and the reference signal port 2 is associated with the antenna port 3 of the terminal device. When the terminal device sends one reference signal resource to the network device through two reference signal ports, if the two reference signal ports are the reference signal port 3 and the reference signal port 4, when the terminal device sends the reference signal resource, the reference signal port 3 is associated with the antenna port 3, and the reference signal port 4 is associated with the antenna port 4.

Optionally, the first configuration information includes a second reference signal resource set, and the second reference signal resource set includes information indicating the P reference signal resources.

Optionally, the first configuration information includes the first information element and a third information element, the first information element indicates the S reference signal resources, and the third information element indicates the P reference signal resources.

It should be understood that the network device may configure the S reference signal resources and the P reference signal resources by using one information element, or may configure the S reference signal resources and the P reference signal resources by using different information elements.

It should be further understood that, in this embodiment of this application, the first information element, the second information element, and the third information element may be a same information element, or may be different information elements. In other words, the S reference signal resources, the P reference signal resources, and the information indicating the K reference signal ports may be configured by using a same information element, or may be configured by using different information elements. The information indicating the K reference signal ports is the at least one index, the identifiers of the K reference signal ports, or the bitmap. This is not specifically limited in this application.

Optionally, the method 600 further includes: The network device sends third configuration information to the terminal device, where the third configuration information indicates the P reference signal resources. Correspondingly, the terminal device receives fifth configuration information from the network device.

It should be understood that the third configuration information and the first configuration information may be same information, or may be different information. In other words, the network device may configure the S reference signal resources and the P reference signal resources via same signaling, or may configure the S reference signal resources and the P reference signal resources via different signaling.

It should be further understood that, in this embodiment of this application, the first configuration information, the second configuration information, and the third configuration information may be same information, or may be different information. In other words, the S reference signal resources, the P reference signal resources, and the information indicating the K reference signal ports may be configured via same signaling, or may be configured via different signaling. The information indicating the K reference signal ports is the at least one index, the identifiers of the K reference signal ports, or the bitmap. This is not specifically limited in this application.

In a possible implementation, the first configuration information further indicates that a sending period of the S reference signal resources is a first period and a sending period of the P reference signal resources is a second period; S602 may be implemented in the following manner: sending the S reference signal resources to the network device based on the first period through the K reference signal ports in the M reference signal ports; and sending the P reference signal resources to the network device through the M reference signal ports includes: sending the P reference signal resources to the network device based on the second sending period through the M reference signal ports.

Optionally, the first period may be shorter than the second period. For example, the first period may be 20 ms, and the second period may be 60 ms.

According to the foregoing technical solution, the network device may obtain, at an interval of a time length corresponding to the first period, the channel information of the M reference signal ports corresponding to the P reference signal resources, obtain, at an interval of a time length corresponding to the second period, the channel information of the K reference signal ports corresponding to the S reference signal resources, and determine the channel information of the M reference signal ports by using the correlation between the M reference signal ports and based on the channel information of the K reference signal ports. Compared with that determined by obtaining only the channel information of the K reference signal ports corresponding to the S reference signal resources, accuracy that is of the channel information of the M reference signal ports and that is determined by the network device is higher. In addition, compared with those in a case in which the terminal device sends the P reference signal resources to the network device based on the second period through the M reference signal ports, system overhead is lower, and the guard interval required for sending the S reference signal resources by the terminal device is shorter. This helps reduce a channel measurement delay and improve channel estimation performance, enhance a downlink precoding capability of the network device, and improve a network throughput.

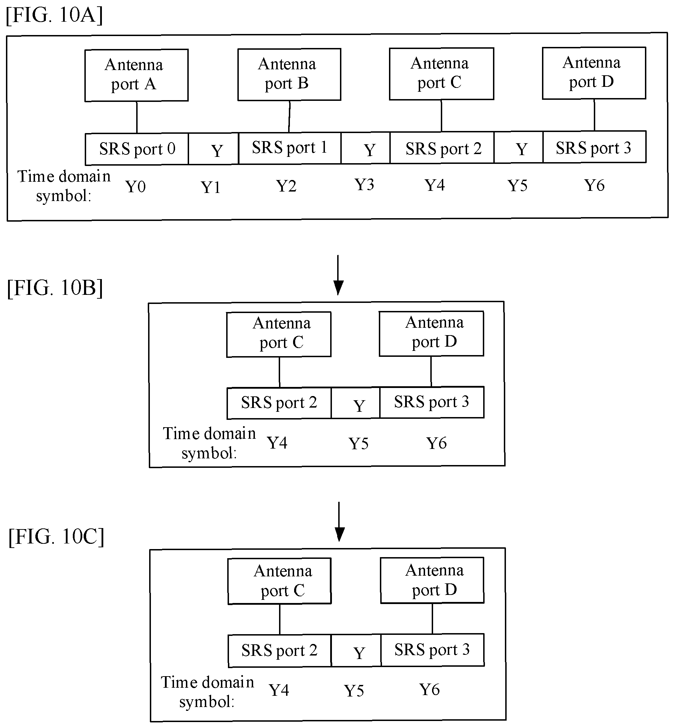

For example, as shown in FIG. 10A to FIG. 10C, it is assumed that the first period is 60 ms, the second period is 20 ms, and the terminal device supports 1T4R, that is, M is 4, K is 2, P is 4, and S is 2. As shown in FIG. 10A, the terminal device sequentially sends four SRS resources at a first moment through four SRS ports. A specific process is as follows: The terminal device sends an SRS resource 1 to the network device on a time domain symbol Y0 through an SRS port 0, and remains silent on a time domain symbol Y1, that is, does not send the SRS resource; sends an SRS resource 2 to the network device on a time domain symbol Y2 through an SRS port 1, and remains silent on a time domain symbol Y3, that is, does not send the SRS resource; sends an SRS resource 3 to the network device on a time domain symbol Y4 through an SRS port 2, and remains silent on a time domain symbol Y5, that is, does not send the SRS resource; and sends an SRS resource 4 to the network device on a time domain symbol Y6 through an SRS port 3. At a moment 20 ms from the first moment, as shown in FIG. 10B, the terminal device sends the SRS resource 3 to the network device on the time domain symbol Y4 through the SRS port 2, and remains silent on the time domain symbol Y5, that is, does not send the SRS resource; and sends the SRS resource 4 to the network device on the time domain symbol Y6 through the SRS port 3. At a moment 40 ms from the first moment, as shown in FIG. 10C, the terminal device sends the SRS resource 3 to the network device on the time domain symbol Y4 through the SRS port 2, and remains silent on the time domain symbol Y5, that is, does not send the SRS resource; and sends the SRS resource 4 to the network device on the time domain symbol Y6 through the SRS port 3.

In addition, when the terminal device sends the four SRS resources through the four SRS ports, an association relationship between the four SRS ports and four physical receive antennas of the terminal device is the same as an association relationship between two SRS ports and two physical receive antennas of the terminal device when the terminal device sends two SRS resources through the two SRS ports. To be specific, as shown in FIG. 10A, when the terminal device sends the four SRS resources through the four SRS ports, the association relationship between the four SRS ports and the four physical receive antennas of the terminal device is as follows: The SRS port 0 is associated with an antenna port A, that is, the terminal device sends the SRS resource 1 to the network device through the antenna port A and the SRS port 0; the SRS port 1 is associated with an antenna port B, that is, the terminal device sends the SRS resource 2 to the network device through the antenna port B and the SRS port 1; the SRS port 2 is associated with an antenna port C, that is, the terminal device sends the SRS resource 3 to the network device through the antenna port C and the SRS port 2; and the SRS port 3 is associated with an antenna port D, that is, the terminal device sends the SRS resource 4 to the network device through the antenna port D and the SRS port 3. The S reference signal resources configured by the network device for the terminal device are the SRS resource 3 and the SRS resource 4. The SRS resource 3 includes information indicating the SRS port 2, that is, the SRS resource 3 corresponds to the SRS port 2; and the SRS resource 4 includes the information indicating the SRS port 3, that is, the SRS resource 4 corresponds to the SRS port 3. Therefore, when the terminal device sends the four SRS resources to the network device at the first moment, the SRS port 2 corresponds to the antenna port C, and the SRS port 3 corresponds to the antenna port D. Therefore, at the moment 20 ms or 40 ms from the first moment, the terminal device sends the SRS resource 3 to the network device through the antenna port C and the SRS port 2, and the terminal device sends the SRS resource 4 to the network device through the antenna port D and the SRS port 3. It can be learned from the example in FIG. 10A to FIG. 10C that, compared with those in a solution in which the terminal device sends the four SRS resources at a period of 20 ms, in this solution, the system overhead for sending the SRS resources by the terminal device is low, and the required guard interval is shorter.

In a possible implementation, the K reference signal ports included in the S reference signal resources are different across G consecutive transmissions by the terminal device, and G is the integer greater than or equal to 2.

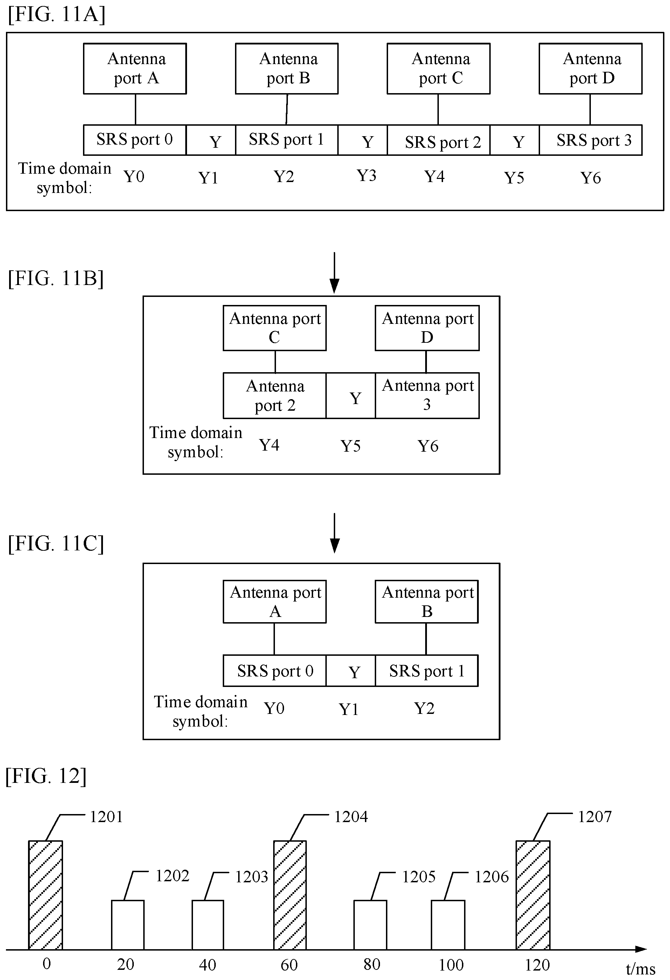

For example, it is assumed that the first period is 60 ms, the second period is 20 ms, and the terminal device supports 1T4R, that is, M is 4, K is 2, and T is 2. As shown in FIG. 11A, the terminal device sequentially sends four SRS resources at a first moment through four SRS ports. A specific process is as follows: The terminal device sends an SRS resource 1 to the network device on a time domain symbol Y0 through an SRS port 0, and remains silent on a time domain symbol Y1, that is, does not send the SRS resource; sends an SRS resource 2 to the network device on a time domain symbol Y2 through an SRS port 1, and remains silent on a time domain symbol Y3, that is, does not send the SRS resource; sends an SRS resource 3 to the network device on a time domain symbol Y4 through an SRS port 2, and remains silent on a time domain symbol Y5, that is, does not send the SRS resource; and sends an SRS resource 4 to the network device on a time domain symbol Y6 through an SRS port 3. At a moment 20 ms from the first moment, as shown in FIG. 11B, the terminal device sends the SRS resource 3 to the network device on the time domain symbol Y4 through the SRS port 2, and remains silent on the time domain symbol Y5, that is, does not send the SRS resource; and sends the SRS resource 4 to the network device on the time domain symbol Y6 through the SRS port 3. At a moment 40 ms from the first moment, as shown in FIG. 11C, the terminal device sends the SRS resource 3 to the network device on the time domain symbol Y0 through the SRS port 0, and remains silent on the time domain symbol Y1, that is, does not send the SRS resource; and sends the SRS resource 4 to the network device on the time domain symbol Y2 through the SRS port 1. (b) and (c) show reference signal resources corresponding to K reference signal ports sent for two consecutive transmissions, and the reference signal ports included in the reference information resources sent for the two transmissions are different.

In addition, as shown in FIG. 11A to FIG. 11C, when the terminal device sends the four SRS resources through the four SRS ports, the SRS port 0 is associated with an antenna port A, the SRS port 1 is associated with an antenna port B, the SRS port 2 is associated with an antenna port C, and the SRS port 3 is associated with an antenna port D. When the terminal device sends two SRS resources through two SRS ports, an association relationship between the two SRS ports and antenna ports of two physical receive antennas of the terminal device is the same as an association relationship between the four SRS ports and antenna ports of four physical receive antennas of the terminal device when the terminal device sends the four SRS resources through the four SRS ports. To be specific, as shown in FIG. 11B, when the terminal device sends the SRS resource 3 and the SRS resource 4, the SRS port 2 is associated with the antenna port C, and the SRS port 3 is associated with the antenna port D. As shown in FIG. 11C, when the terminal device sends the SRS resource 3 and the SRS resource 4, the SRS port 0 is associated with the antenna port A, and the SRS port 1 is associated with the antenna port B. By using the reference signal resources sent for the two transmissions, the four reference signal ports can be traversed, and the four antenna ports of the terminal device are simultaneously traversed.

It may be understood that sending the P reference signal resources to the network device through the M ports can be implemented in the following manner: sending the P reference signal resources and skipping sending the S reference signal resources when time domain resources of the S reference signal resources completely or partially overlap time domain resources of the P reference signal resources.

It should be understood that, according to the foregoing solution, when the time domain resources of the S reference signal resources completely or partially overlap the time domain resources of the P reference signal resources, the network device may receive the P reference signal resources from the terminal device, and obtain the channel information of the M ports corresponding to the P reference signal resources. Compared with obtaining the channel information of the K ports corresponding to the S reference signal resources, obtaining the channel information of the M ports corresponding to the P reference signal resources has higher channel measurement accuracy.

For example, as shown in FIG. 12, it is assumed that the first period is 60 ms, and the second period is 20 ms. At a moment 0, time domain resources of S reference signal resources partially overlap time domain resources of P reference signal resources, and the terminal device sends P reference signals 1201; at a moment 20 ms from the moment 0, the terminal device sends S reference signal resources 1202; at a moment 40 ms from the moment 0, the terminal device sends S reference signal resources 1203; at a moment 60 ms from the moment 0, the time domain resources of the S reference signal resources partially overlap the time domain resources of the P reference signal resources, and the terminal device sends P reference signal resources 1204; at a moment 80 ms from the moment 0, the terminal device sends S reference signal resources 1205; at a moment 100 ms from the moment 0, the terminal device sends S reference signal resources 1206; and at a moment 120 ms from the moment 0, the time domain resources of the S reference signal resources partially overlap the time domain resources of the P reference signal resources, and the terminal device sends P reference signal resources 1207. Reference signal resources included in the S reference signal resources 1202, the S reference signal resources 1203, the S reference signal resources 1205, and the S reference signal resources 1206 may be the same or different. Reference signal resources included in the P reference signals 1201, the P reference signals 1204, and the P reference signals 1207 are the same.

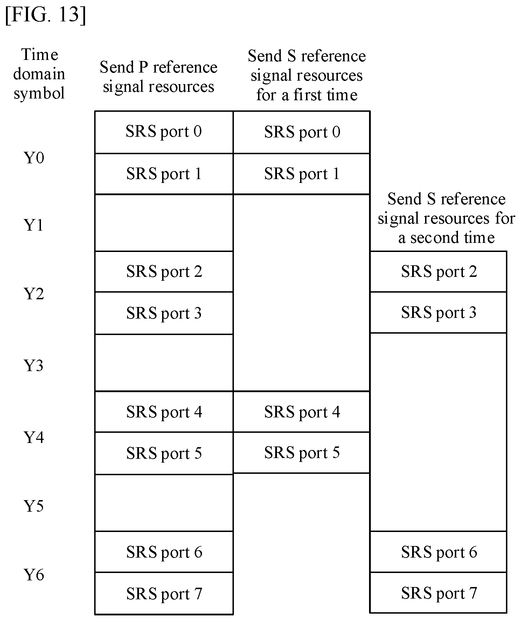

For another example, when the K reference signal ports are determined based on the first correspondence, for a 2T8R terminal device, it is assumed that the first correspondence between the index and the port identifier is shown in Table 3. If the index corresponding to the K SRS ports included in the S SRS resources configured based on the first configuration information is 0, as shown in FIG. 13, it is assumed that the terminal device sends the eight SRS resources to the network device at a first moment; sends an SRS resource 1 to the network device on a time domain symbol Y0 through an SRS port 0 and an SRS port 1; does not send the SRS resource on a time domain symbol Y1; then sends an SRS resource 2 to the network device on a time domain symbol Y2 through an SRS port 2 and an SRS port 3; does not send the SRS resource on a time domain symbol Y3; then sends an SRS resource 3 to the network device on a time domain symbol Y4 through an SRS port 4 and an SRS port 5; does not send the SRS resource on a time domain symbol Y5; and then sends an SRS resource 4 to the network device on a time domain symbol Y6 through an SRS port 6 and an SRS port 7. Then, because the S SRS resources configured in the first configuration information are the SRS resource 1 and the SRS resource 3, and the index corresponding to the configured K reference signal ports is 0, the terminal device sends the SRS resource 1 to the network device on the time domain symbol Y0 through the SRS port 0 and the SRS port 1; does not send the SRS resource on the time domain symbol Y1, the time domain symbol Y2, and the time domain symbol Y3; and then sends the SRS resource 3 to the network device on the time domain symbol Y4 through the SRS port 4 and the SRS port 5. Then, the terminal device may determine, according to the foregoing formula, that the index corresponding to the K SRS ports corresponding to the S SRS resources sent for the second time is 1. In this case, the terminal device sends the SRS resource 1 to the network device on the time domain symbol Y2 through the SRS port 2 and the SRS port 3; does not send the SRS resource on the time domain symbol Y3, the time domain symbol Y4, and the time domain symbol Y5; and then sends the SRS resource 3 to the network device on the time domain symbol Y6 through the SRS port 6 and the SRS port 7.

In a non-antenna switching scenario, M may be the quantity of transmit antennas of the terminal device. In this case, S=1, and the S reference signal resources are sent on one time domain symbol.

In a non-antenna switching scenario, by setting K to an integer less than M, the terminal device can send the S reference signal resources to the network device through the K reference signal ports. This allows the network device can obtain the channel information of the K reference signal ports, and further determine the channel information of the M reference signal ports based on the correlation between the M reference signal ports and the channel information of the K reference signal ports. Compared with a case in which the network device configures, for the terminal device, the reference signal resources corresponding to the M reference signal ports, and the terminal device sends, to the network device through the N reference signal ports, the reference signal resources corresponding to the M reference signal ports, the proposed method of sending, by the terminal device, the S reference signal resources to the network device through the K reference signal ports reduces system overhead.

In an optional embodiment, the terminal device supports NTMR, each of the S reference signal resources is sent on each of S different time domain symbols, the S time domain symbols include Z groups of time domain symbols, each of the Z groups of time domain symbols includes N contiguous time domain symbols, there is a time interval between any two of the Z groups of time domain symbols, the time interval is greater than or equal to the first interval Y, each of the S reference signal resources includes the K/S reference signal ports, and Z is an integer obtained by rounding up a ratio of S to N.

It should be understood that K/S may be an integer less than N, and K may be less than or equal to M.

According to the foregoing technical solution, when sending each of the S reference signal resources on each symbol, the terminal device that supports NTMR may send each reference signal resource by using N transmit links through the K/S reference signal ports. Compared with a case in which the network device configures S reference signal resources for the terminal device, where the S signal resources include K reference signal ports, and the terminal device sends, on each time domain symbol by using N transmit links, reference signal resources corresponding to N reference signal ports, in this method, when K/S may be the integer less than N, for each of the K reference signal ports, each reference signal port may send the reference signal resource via power amplifiers of the plurality of transmit links, and transmit power is higher.

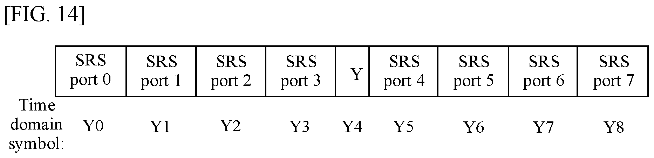

For example, as shown in FIG. 14, it is assumed that S is 8, K and M are 8, N is 4, and Z is 2. For a terminal device that supports a 4T8R capability, the network device may configure eight SRS resources for the terminal device, and each SRS resource includes one SRS port. The eight SRS resources are respectively sent on eight different time domain symbols, the eight time domain symbols may be grouped into two groups, and each group of time domain symbols includes four contiguous time domain symbols, to be specific, one group of time domain symbols includes a time domain symbol Y0, a time domain symbol Y1, a time domain symbol Y2, and a time domain symbol Y3, and the other group of time domain symbols includes a time domain symbol Y5, a time domain symbol Y6, a time domain symbol Y7, and a time domain symbol Y8. In this way, the terminal device may simultaneously activate four antennas to send the SRS resource without a measurement gap (GAP) in between. To be specific, the terminal device may send an SRS resource 1 to the network device on the time domain symbol Y0 by using four transmit links through an SRS port 0; the terminal device sends an SRS resource 2 to the network device on the time domain symbol Y1 by using the four transmit links through an SRS port 1; the terminal device sends an SRS resource 3 to the network device on the time domain symbol Y2 by using the four transmit links through an SRS port 2; and the terminal device sends an SRS resource 4 to the network device on the time domain symbol Y3 by using the four transmit links through an SRS port 3. No guard interval is required between SRS resources sent for two consecutive transmissions by the terminal device. However, because the quantity of transmit links of the terminal device is 4, antenna switching needs to be performed when the SRS resources corresponding to the other four SRS ports are sent. Therefore, there is a guard interval between the SRS resource 4 and an SRS resource 5 that are sent by the terminal device to the network device. To be specific, the terminal device remains silent on the time domain symbol Y4, that is, does not send the SRS resource. Then, the terminal device sends the SRS resource 5 to the network device on the time domain symbol Y5 by using the four transmit links through an SRS port 5; the terminal device sends an SRS resource 6 to the network device on the time domain symbol Y6 by using the four transmit links through an SRS port 6; the terminal device sends an SRS resource 7 to the network device on the time domain symbol Y7 by using the four transmit links through an SRS port 7; and the terminal device sends an SRS resource 8 to the network device on the time domain symbol Y8 by using the four transmit links through an SRS port 8. Compared with the reference signal resource sending process of the terminal device that supports the 4T8R capability shown in FIG. 5, in this solution, the reference signal resources corresponding to the K/S reference signal ports may be sent by using the N transmit links. When K/S is less than N, the plurality of power amplifiers may be configured to support sending of a reference signal resource corresponding to one reference signal port, so that transmit power for sending each reference signal resource by the terminal device is higher.

This application further provides another signal transmission method. The method includes the following steps.

A network device sends first configuration information to a terminal device, where the first configuration information indicates at least one reference signal resource, each of the at least one reference signal resource includes K reference signal ports, the K reference signal ports are K ports in N reference signal ports, each of the N reference signal ports corresponds to a distinct antenna port of the terminal device, and K and N are positive integers; and correspondingly, the terminal device receives the first configuration information from the network device.

The terminal device sends one of the at least one reference signal resource to the network device based on the first configuration information through the K reference signal ports; and correspondingly, the network device receives the one of the at least one reference signal resource from the terminal device, and obtains channel information of the K reference signal ports corresponding to the S reference signal resources.

The terminal device may be a terminal device that supports NTMR. K may be an integer less than N. The reference signal resource may be sent on one time domain symbol.

It should be understood that a difference between the method and the method 600 lies in that, in the method 600, the first configuration information is used to configure the S reference signal resources, the S reference signal resources include the K reference signal ports in total, and the K reference signal ports are the K reference signal ports in the M reference signal ports; and in the method, the first configuration information indicates the at least one reference signal resource, and each of the at least one reference signal resource includes the K reference signal ports. In addition, in the method 600, the terminal device sends the S reference signal resources to the network device through the K ports; and in the method, the terminal device sends the one of the at least one reference signal resource to the network device through the K reference signal ports. In addition, an implementation of the method is similar to that of the method 600. For details, refer to the foregoing descriptions. Details are not described herein again.

In the method, by setting K to an integer less than N, the terminal device can send the one reference signal resource to the network device through the K reference signal ports. This allows the network device to obtain the channel information of the K reference signal ports, and further determine channel information of the N reference signal ports based on correlation between the N reference signal ports and the channel information of the K reference signal ports. Compared with a case in which the network device configures, for the terminal device, reference signal resources corresponding to the N reference signal ports, and the terminal device sends, to the network device through the N reference signal ports, the reference signal resources corresponding to the N reference signal ports, the proposed method of sending, by the terminal device, the S reference signal resources to the network device through the K reference signal ports reduces system overhead.

It should be understood that, in embodiments of this application, the symbol Y in FIG. 3, FIG. 4, FIG. 5, FIG. 7, FIG.

**EP 4 779 920 A1**

10A to FIG. 10C, FIG. 11A to FIG. 11C, and FIG. 14 represents the guard interval between the reference signal resources sent for two consecutive transmissions by the terminal device, and the guard interval shown in FIG. 3, FIG. 4, FIG. 5, FIG. 7, FIG. 10A to FIG. 10C, FIG. 11A to FIG. 11C, and FIG. 14 is merely an example. Y may represent one or more time domain symbols, and guard intervals between the reference signal resources sent for two consecutive transmissions by the terminal device may be the same or different. This is not specifically limited in this application.

It should be further understood that, in embodiments of this application, the time domain symbols used to send the S reference signal resources shown in FIG. 10A to FIG. 10C and FIG. 11A to FIG. 11C are merely examples, and a time domain symbol used by the terminal device to send each of the S reference signal resources may alternatively be different from a time domain symbol used by the terminal device to send each of the P reference signal resources. For example, in (b) in FIG. 10B, the terminal device may alternatively send the SRS resource 3 to the network device on the time domain symbol Y1 through the SRS port 2. This is not specifically limited in this application.

It should be understood that sequence numbers of the foregoing methods do not mean execution sequences. The execution sequence of the processes should be determined based on functions and internal logic of the processes.

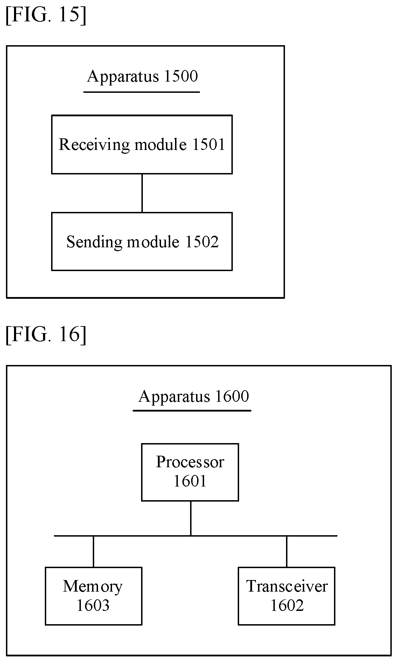

The foregoing describes in detail the signal transmission method in embodiments of this application with reference to FIG. 1 to FIG. 14, and the following describes in detail signal transmission apparatuses in embodiments of this application with reference to FIG. 15 and FIG. 16. The signal transmission apparatus includes a corresponding module or unit configured to perform each part in the foregoing embodiments. The module or unit may be software, hardware, or a combination of software and hardware. The following briefly describes the information transmission apparatus by using examples. For details about solution implementation, refer to the descriptions in the foregoing method embodiments. Details are not described below again.

FIG. 15 is a block diagram of a signal transmission apparatus 1500 according to an embodiment of this application. As shown in FIG. 15, the apparatus 1500 includes a receiving module 1501 and a sending module 1502.

In a possible implementation, the apparatus 1500 is configured to implement steps corresponding to the terminal device in the method 600.

The receiving module 1501 is configured to receive first configuration information from a network device, where the first configuration information indicates S reference signal resources, the S reference signal resources include K reference signal ports, the K reference signal ports are K reference signal ports in M reference signal ports, each of the M reference signal ports corresponds to a distinct antenna port of the apparatus 1500, and S, K, and M are positive integers; and the sending module 1502 is configured to send the S reference signal resources to the network device based on the first configuration information through the K reference signal ports.

Optionally, each of the S reference signal resources is sent on a different time domain symbol, and each of the S reference signal resources includes K/S reference signal ports, where K is an integer multiple of S, and / indicates division.

Optionally, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

Optionally, the first correspondence is configured by the network device via signaling, or the first correspondence is specified in a protocol.

Optionally, the first configuration information includes port identifiers of the K reference signal ports.

Optionally, the first configuration information includes a bitmap, and the bitmap indicates the K reference signal ports.

Optionally, the bitmap is determined by using the following formula:

$$B = f_1(M, K),$$

where

B is the bitmap, and $f_1(M, K)$ is a function value that varies with M and K.

Optionally, K reference signal ports included in S reference signal resources are different across G consecutive transmissions by the apparatus 1500, and G is an integer greater than or equal to 2.

Optionally, a reference signal port included in S reference signal resources sent for an $i^{th}$ transmission among the G consecutive transmissions is determined by using the following formula:

$$p_i = f_2(p_1, p_{offset}, i),$$

where

$p_i$ is information indicating the reference signal port included in the S reference signal resources sent for the $i^{th}$ transmission, $f_2(p_1, p_{offset}, i)$ is a function value that varies with $p_1$, $p_{offset}$, and i, $p_1$ is information indicating a reference signal port included in S reference signal resources sent for a first transmission, $p_{offset}$ is an offset value of the information indicating the reference signal port, and i is an integer greater than or equal to 2 and less than or equal to G.

Optionally, the offset value is specified in a protocol, or the offset value is configured by the network device via signaling.

Optionally, the first configuration information further includes information used to configure P reference signal resources, the P reference signal resources include the M reference signal ports, and P is a positive integer; and the sending module 1502 is further configured to send the P reference signal resources to the network device through the M reference signal ports.

Optionally, the first configuration information further indicates that a sending period of the S reference signal resources is a first period and a sending period of the P reference signal resources is a second period; the sending module 1502 is specifically configured to send the S reference signal resources to the network device based on the first period through the K reference signal ports in the M reference signal ports; and the sending module 1502 is further specifically configured to send the P reference signal resources to the network device based on the second period through the M reference signal ports.

In another possible implementation, the apparatus 1500 is configured to implement steps corresponding to the network device in the method 600.

The sending module 1502 is configured to send first configuration information to a terminal device, where the first configuration information indicates S reference signal resources, the S reference signal resources include K reference signal ports, the K reference signal ports are K reference signal ports in M reference signal ports, each of the M reference signal ports corresponds to a distinct antenna port of the terminal device, and S, K, and M are positive integers; and the receiving module 1501 is configured to: receive the S reference signal resources from the terminal device, and obtain channel information of the K reference signal ports.

Optionally, each of the S reference signal resources is sent on a different time domain symbol, and each of the S reference signal resources includes K/S reference signal ports, where K is an integer multiple of S, and / indicates division.

Optionally, the first configuration information includes at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports includes K reference signal ports.

Optionally, the first correspondence is configured by the apparatus 1500 via signaling, or the first correspondence is specified in a protocol.

Optionally, the first configuration information includes port identifiers of the K reference signal ports.

Optionally, the first configuration information includes a bitmap, and the bitmap indicates the K reference signal ports.

Optionally, the bitmap is determined by using the following formula:

$$B=f_1(M, K),$$

where
B is the bitmap, and $f_1(M, K)$ is a function value that varies with M and K.

Optionally, K reference signal ports included in S reference signal resources are different across G consecutive transmissions by the terminal device, and G is an integer greater than or equal to 2.

Optionally, a reference signal port included in S reference signal resources sent for an i$^{th}$ transmission among the G consecutive transmissions is determined by using the following formula:

$$p_i = f_2(p_1, p_{offset}, i),$$

where
$p_i$ is information indicating the reference signal port included in the S reference signal resources sent for the i$^{th}$ transmission, $f_2(p_1, p_{offset}, i)$ is a function value that varies with $p_1$, $p_{offset}$, and i, $p_1$ is information indicating a reference signal port included in S reference signal resources sent for a first transmission, $p_{offset}$ is an offset value of the information indicating the reference signal port, and i is a positive integer greater than or equal to 2 and less than or equal to G.

Optionally, the offset value is specified in a protocol, or the offset value is configured by the apparatus 1500 via signaling.

Optionally, the first configuration information further includes information used to configure P reference signal resources, the P reference signal resources include the M reference signal ports, and P is a positive integer; and the receiving module 1501 is further configured to: receive the P reference signal resources from the terminal device, and obtain channel information of the M reference signal ports.

Optionally, the first configuration information further indicates that a sending period of the S reference signal resources is a first period and a sending period of the P reference signal resources is a second period; the receiving module 1501 is specifically configured to receive, based on the first period, the S reference signal resources sent by the terminal device; and the receiving module 1501 is further specifically configured to receive, based on the second period, the P reference signal resources sent by the terminal device.

It should be understood that the apparatus 1500 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the network device or the terminal device in the foregoing embodiments, and may be configured to perform procedures and/or steps corresponding to the network device or the terminal device in the foregoing method embodiments. To avoid repetition, details are not described herein again.

The apparatus 1500 has a function of implementing the corresponding steps performed by the network device or the terminal device in the foregoing methods. The foregoing function may be implemented by hardware, or may be implemented by hardware executing corresponding software. The hardware or the software includes one or more modules corresponding to the function. For example, the processing module 1102 may include an adoption module. The adoption module may be configured to implement steps and/or procedures that correspond to the processing module 1102 and that are used to perform an adoption action.

In embodiments of this application, the apparatus 1500 in FIG. 15 may alternatively be a chip, for example, an SoC.

FIG. 16 is a diagram of a signal transmission apparatus 1600 according to an embodiment of this application. The apparatus 1600 includes a processor 1601, a transceiver 1602, and a memory 1603. The processor 1601, the transceiver 1602, and the memory 1603 communicate with each other through an internal connection path. The memory 1603 is configured to store instructions. The processor 1601 is configured to execute the instructions stored in the memory 1603, to control the transceiver 1602 to send a signal and/or receive a signal.

It should be understood that the apparatus 1600 may be specifically the network device or the terminal device in the foregoing embodiments, and may be configured to perform steps and/or procedures corresponding to the network device or the terminal device in the foregoing method embodiments. Optionally, the memory 1603 may include a read-only memory and a random access memory, and provide the instructions and data for the processor. Part of the memory may further include a non-volatile random access memory. For example, the memory may further store information of a device type. The processor 1601 may be configured to execute the instructions stored in the memory. When the processor 1601 executes the instructions stored in the memory, the processor 1601 is configured to perform steps and/or procedures in the foregoing method embodiments. The transceiver 1602 may include a transmitter and a receiver. The transmitter may be configured to implement steps and/or procedures corresponding to the transceiver and configured to perform a sending action. The receiver may be configured to implement steps and/or procedures corresponding to the transceiver and configured to perform a receiving action.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

In an implementation process, the steps in the foregoing method may be completed through a hardware integrated logic circuit in the processor or by using instructions in a form of software. The steps of the method disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein.

This application further provides a computer-readable storage medium. The computer-readable storage medium is configured to store a computer program, and the computer program is used to implement the method shown in the foregoing method embodiments.

This application further provides a computer program product. The computer program product includes a computer program (which may also be referred to as code or instructions). When the computer program is run on a computer, the computer may perform the method shown in the foregoing method embodiments.

A person of ordinary skill in the art may be aware that, modules and algorithm steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may or may not be physically separate, and components displayed as modules may or may not be physical modules, may be located in one position, or may be distributed on a plurality of network modules. A part or all of the modules may be selected based on actual requirements to achieve the objectives of the solutions of embodiments.

In addition, functional modules in embodiments of this application may be integrated into one processing module, each of the modules may exist alone physically, or two or more modules are integrated into one module.

When the functions are implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform a part or all of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A signal transmission method, applied to a terminal device, wherein the method comprises:

   receiving first configuration information from a network device, wherein the first configuration information indicates S reference signal resources, the S reference signal resources comprise K reference signal ports, the K reference signal ports are K reference signal ports in M reference signal ports, each of the M reference signal ports corresponds to a distinct antenna port of the terminal device, and S, K, and M are positive integers; and
   sending the S reference signal resources to the network device based on the first configuration information through the K reference signal ports.

2. The method according to claim 1, wherein each of the S reference signal resources is sent on a different time domain symbol, and each of the S reference signal resources comprises K/S reference signal ports, wherein K is an integer multiple of S, and / indicates division.

3. The method according to claim 1 or 2, wherein the first configuration information comprises at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports comprises K reference signal ports.

4. The method according to claim 3, wherein the first correspondence is configured by the network device via signaling, or the first correspondence is specified in a protocol.

5. The method according to claim 1 or 2, wherein the first configuration information comprises port identifiers of the K reference signal ports.

6. The method according to claim 1 or 2, wherein the first configuration information comprises a bitmap, and the bitmap indicates the K reference signal ports.

7. The method according to claim 6, wherein the bitmap is determined by using the following formula:

$$B = f_1(M, K),$$

wherein
B is the bitmap, and $f_1(M, K)$ is a function value that varies with M and K.

8. The method according to any one of claims 1 to 6, wherein K reference signal ports contained in S reference signal resources are different across G consecutive transmissions by the terminal device, and G is an integer greater than or equal to 2.

9. The method according to claim 8, wherein a reference signal port contained in S reference signal resources sent for an $i^{th}$ transmission among the G consecutive transmissions is determined by using the following formula:

$$p_i = f_2(p_1, p_{offset}, i),$$

wherein
$p_i$ is information indicating the reference signal port contained in the S reference signal resources sent for the $i^{th}$ transmission, $f_2(p_1, p_{offset}, i)$ is a function value that varies with $p_1$, $p_{offset}$, and i, pi is information indicating a reference signal port contained in S reference signal resources sent for a first transmission, $p_{offset}$ is an offset value of the information indicating the reference signal port, and i is an integer greater than or equal to 2 and less than or equal to G.

10. The method according to claim 9, wherein the offset value is specified in a protocol, or the offset value is configured by the network device via signaling.

11. The method according to any one of claims 1 to 10, wherein the first configuration information further comprises information used to configure P reference signal resources, the P reference signal resources comprise the M reference signal ports, and P is a positive integer; and
the method further comprises:
sending the P reference signal resources to the network device through the M reference signal ports.

12. The method according to claim 11, wherein the first configuration information further indicates that a sending period of the S reference signal resources is a first period and a sending period of the P reference signal resources is a second period;
sending the S reference signal resources to the network device through the K reference signal ports comprises:

sending the S reference signal resources to the network device based on the first period through the K reference signal ports in the M reference signal ports; and
sending the P reference signal resources to the network device through the M reference signal ports comprises:
sending the P reference signal resources to the network device based on the second period through the M reference signal ports.

13. A signal transmission method, applied to a network device, wherein the method comprises:

sending first configuration information to a terminal device, wherein the first configuration information indicates S reference signal resources, the S reference signal resources comprise K reference signal ports, the K reference signal ports are K reference signal ports in M reference signal ports, each of the M reference signal ports corresponds to a distinct antenna port of the terminal device, and S, K, and M are positive integers; and receiving the S reference signal resources from the terminal device, and obtaining channel information of the K reference signal ports.

14. The method according to claim 13, wherein each of the S reference signal resources is sent on a different time domain symbol, and each of the S reference signal resources comprises K/S reference signal ports, wherein K is an integer multiple of S, and / indicates division.

15. The method according to claim 13 or 14, wherein the first configuration information comprises at least one index, the at least one index indicates the K reference signal ports, the at least one index is derived from a first correspondence, the first correspondence represents a correspondence between a plurality of indexes and port identifiers of a plurality of groups of reference signal ports, and each of the plurality of groups of reference signal ports comprises K reference signal ports.

16. The method according to claim 15, wherein the first correspondence is configured by the network device via signaling, or the first correspondence is specified in a protocol.

17. The method according to claim 13 or 14, wherein the first configuration information comprises port identifiers of the K reference signal ports.

18. The method according to claim 13 or 14, wherein the first configuration information comprises a bitmap, and the bitmap indicates the K reference signal ports.

19. The method according to claim 18, wherein the bitmap is determined by using the following formula:

$$B=f_1(M, K),$$

wherein
B is the bitmap, and $f_1(M, K)$ is a function value that varies with M and K.

20. The method according to any one of claims 13 to 18, wherein K reference signal ports contained in S reference signal resources are different across G consecutive transmissions by the terminal device, and G is an integer greater than or equal to 2.

21. The method according to claim 20, wherein a reference signal port contained in S reference signal resources sent for an $i^{th}$ transmission among the G consecutive transmissions is determined by using the following formula:

$$p_i = f_2(p_1, p_{offset}, i),$$

wherein
$p_i$ is information indicating the reference signal port contained in the S reference signal resources sent for the $i^{th}$ transmission, $f_2(p_1, p_{offset}, i)$ is a function value that varies with $p_1$, $p_{offset}$, and i, $p_1$ is information indicating a reference signal port contained in S reference signal resources sent for a first transmission, $p_{offset}$ is an offset value of the information indicating the reference signal port, and i is a positive integer greater than or equal to 2 and less than or equal to G.

22. The method according to claim 21, wherein the offset value is specified in a protocol, or the offset value is configured by the network device via signaling.

23. The method according to any one of claims 13 to 22, wherein the first configuration information further comprises information used to configure P reference signal resources, the P reference signal resources comprise the M reference signal ports, and P is a positive integer; and
the method further comprises:
receiving the P reference signal resources from the terminal device, and obtaining channel information of the M reference signal ports.

24. The method according to claim 23, wherein the first configuration information further indicates that a sending period of the S reference signal resources is a first period and a sending period of the P reference signal resources is a second period;

receiving the S reference signal resources sent by the terminal device comprises:

receiving, based on the first period, the S reference signal resources sent by the terminal device; and
receiving the P reference signal resources sent by the terminal device comprises:
receiving, based on the second period, the P reference signal resources sent by the terminal device.

25. A signal transmission apparatus, comprising a module configured to perform the method according to any one of claims 1 to 12, or a module configured to perform the method according to any one of claims 13 to 24.

26. A signal transmission apparatus, comprising a processor, wherein the processor is coupled to a memory, the memory is configured to store a computer program, and when the processor invokes the computer program, the apparatus is enabled to perform the method according to any one of claims 1 to 12 or the method according to any one of claims 13 to 24.

27. A computer-readable storage medium, configured to store a computer program, wherein the computer program comprises instructions for implementing the method according to any one of claims 1 to 12, or instructions for implementing the method according to any one of claims 13 to 24.

28. A computer program product, wherein the computer program product comprises instructions, and when the instructions are run on a computer, the computer is enabled to implement the method according to any one of claims 1 to 12 or the method according to any one of claims 13 to 24.

[FIG. 1]

| | Send an SRS resource for a first time | Send an SRS resource for a second time | Send an SRS resource for a third time | Send an SRS resource for a fourth time |
|---|---|---|---|---|
| 0 | ░ | | | RB |
| 1 | ░ | | | |
| 2 | ░ | | | |
| 3 | ░ | | | |
| 4 | | ░ | | |
| 5 | | ░ | | |
| 6 | | ░ | | |
| 7 | | ░ | | |
| 8 | | | ░ | |
| 9 | | | ░ | |
| 10 | | | ░ | |
| 11 | | | ░ | |
| 12 | | | | ░ |
| 13 | | | | ░ |
| 14 | | | | ░ |
| 15 | | | | ░ |

[FIG. 2]

200

210

220

EP 4 779 920 A1

[FIG. 3]

Guard interval

| SRS port 0 | Y | SRS port 1 | Y | SRS port 2 | Y | SRS port 3 | Y | SRS port 4 | Y | SRS port 5 | Y | SRS port 6 | Y | SRS port 7 |
|---|---|---|---|---|---|---|---|---|---|---|---|---|---|---|

Time domain symbol:

Y0  Y1  Y2  Y3  Y4  Y5  Y6  Y7  Y8  Y9  Y10  Y11  Y12  Y13  Y14

[FIG. 4]

Guard interval

| SRS port 0 | | SRS port 2 | | SRS port 4 | | SRS port 6 |
| SRS port 1 | Y | SRS port 3 | Y | SRS port 5 | Y | SRS port 7 |

Time domain symbol:  Y0    Y1    Y2    Y3    Y4    Y5    Y6

[FIG. 5]

Guard interval

| | | |
|---|---|---|
| SRS port 0 | | SRS port 4 |
| SRS port 1 | Y | SRS port 5 |
| SRS port 2 | | SRS port 6 |
| SRS port 3 | | SRS port 7 |

Time domain
symbol:    Y0         Y1         Y2

[FIG. 6]

600

| Terminal device | | Network device |
|---|---|---|

S601: First configuration information, where the first configuration information indicates S reference signal resources, the S reference signal resources include K reference signal ports, and the K reference signal ports are K reference signal ports in M reference signal ports

S602: Send the S reference signal resources to the network device based on the first configuration information through the K reference signal ports

[FIG. 7]

| SRS resource 1 | Y | SRS resource 2 | Y | SRS resource 3 | Y | SRS resource 4 |
|---|---|---|---|---|---|---|

Time domain symbol:  Y0    Y1    Y2    Y3    Y4    Y5    Y6

[FIG. 8]

801

| 1 | 1 | 0 | 0 |

802

| Port 1 | Port 2 | Port 3 | Port 4 |

[FIG. 9]

901

| 1 | 0 | 0 | 1 | 0 | 1 | 0 | 1 |

902

| Port 1 | Port 2 | Port 3 | Port 4 | Port 5 | Port 6 | Port 7 | Port 8 |

[FIG. 10A]

| Antenna port A | | Antenna port B | | Antenna port C | | Antenna port D |
|---|---|---|---|---|---|---|
| SRS port 0 | Y | SRS port 1 | Y | SRS port 2 | Y | SRS port 3 |

Time domain symbol:  Y0  Y1  Y2  Y3  Y4  Y5  Y6

[FIG. 10B]

| Antenna port C | | Antenna port D |
|---|---|---|
| SRS port 2 | Y | SRS port 3 |

Time domain symbol:  Y4  Y5  Y6

[FIG. 10C]

| Antenna port C | | Antenna port D |
|---|---|---|
| SRS port 2 | Y | SRS port 3 |

Time domain symbol:  Y4  Y5  Y6

[FIG. 11A]

| Antenna port A | | Antenna port B | | Antenna port C | | Antenna port D |
|---|---|---|---|---|---|---|
| SRS port 0 | Y | SRS port 1 | Y | SRS port 2 | Y | SRS port 3 |

Time domain symbol:  Y0   Y1   Y2   Y3   Y4   Y5   Y6

[FIG. 11B]

| Antenna port C | | Antenna port D |
|---|---|---|
| Antenna port 2 | Y | Antenna port 3 |

Time domain symbol:  Y4   Y5   Y6

[FIG. 11C]

| Antenna port A | | Antenna port B |
|---|---|---|
| SRS port 0 | Y | SRS port 1 |

Time domain symbol:  Y0   Y1   Y2

[FIG. 12]

1201  1204  1207  1202  1203  1205  1206

0   20   40   60   80   100   120   t/ms

[FIG. 13]

| Time domain symbol | Send P reference signal resources | Send S reference signal resources for a first time | Send S reference signal resources for a second time |
|---|---|---|---|
| Y0 | SRS port 0 | SRS port 0 | |
| | SRS port 1 | SRS port 1 | |
| Y1 | | | |
| Y2 | SRS port 2 | | SRS port 2 |
| | SRS port 3 | | SRS port 3 |
| Y3 | | | |
| Y4 | SRS port 4 | SRS port 4 | |
| | SRS port 5 | SRS port 5 | |
| Y5 | | | |
| Y6 | SRS port 6 | | SRS port 6 |
| | SRS port 7 | | SRS port 7 |

[FIG. 14]

| SRS port 0 | SRS port 1 | SRS port 2 | SRS port 3 | Y | SRS port 4 | SRS port 5 | SRS port 6 | SRS port 7 |
|---|---|---|---|---|---|---|---|---|

Time domain symbol:

Y0    Y1    Y2    Y3    Y4  Y5    Y6    Y7    Y8

[FIG. 15]

Apparatus 1500

Receiving module 1501

Sending module 1502

[FIG. 16]

Apparatus 1600

Processor
1601

Memory
1603

Transceiver
1602

## INTERNATIONAL SEARCH REPORT

| International application No. |
| --- |
| **PCT/CN2024/124276** |

| A. | CLASSIFICATION OF SUBJECT MATTER |
| --- | --- |

H04L5/00(2006.01)i; H04W 72/0446(2023.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, ENTXT, ENTXTC, WPABS, 3GPP: 参考信号, SRS, DMRS, RS, 开销, overhead, 小, 少, 降低, 节省, 节约, small, few, decrease, save, reduce, xTyR, 1T4R, 1T6R, 1T8R, 2T4R, 2T6R, 2T8R, 4T8R, NTMR, 发送天线, 接收天线, transmit, receive, antenna, 切换, switch, 端口, port

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023050337 A1 (GUANGDONG OPPO MOBILE TELECOMMUNICATIONS CORP., LTD.) 06 April 2023 (2023-04-06)<br>description, page 5, line 40 to page 20, line 44 | 1-28 |
| X | WO 2022226679 A1 (QUALCOMM INC.) 03 November 2022 (2022-11-03)<br>description, paragraphs 117-121 and 135-139 | 1-28 |
| X | QUALCOMM INC. "R1-2107328, Discussion on SRS enhancement"<br>*3GPP TSG-RAN WG1 Meeting #106-e*, 27 August 2021 (2021-08-27),<br>section 3 | 1-2, 13-14, 25-28 |
| A | WO 2020248158 A1 (QUALCOMM INC.) 17 December 2020 (2020-12-17)<br>entire document | 1-28 |
| A | CN 108631847 A (HUAWEI TECHNOLOGIES CO., LTD.) 09 October 2018 (2018-10-09)<br>entire document | 1-28 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 January 2025** | **22 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/124276** |

| C. | DOCUMENTS CONSIDERED TO BE RELEVANT | |
| --- | --- | --- |
| Category* | Citation of document, with indication, where appropriate, of the relevant passages | Relevant to claim No. |
| A | MODERATOR (FUTUREWEI). "R1-2207855, FL Summary #1 on SRS enhancements" *3GPP TSG RAN WG1 Meeting #110,* 26 August 2022 (2022-08-26), section 3.8 | 1-28 |

Form PCT/ISA/210 (second sheet) (July 2022)

## INTERNATIONAL SEARCH REPORT
### Information on patent family members

International application No.

**PCT/CN2024/124276**

| Patent document cited in search report | | | Publication date (day/month/year) | Patent family member(s) | | | Publication date (day/month/year) |
|---|---|---|---|---|---|---|---|
| WO | 2023050337 | A1 | 06 April 2023 | CN | 117242862 | A | 15 December 2023 |
| WO | 2022226679 | A1 | 03 November 2022 | US | 2024048348 | A1 | 08 February 2024 |
| WO | 2020248158 | A1 | 17 December 2020 | WO | 2020248821 | A1 | 17 December 2020 |
| | | | | US | 2022216963 | A1 | 07 July 2022 |
| | | | | US | 12028284 | B2 | 02 July 2024 |
| | | | | EP | 3984311 | A1 | 20 April 2022 |
| | | | | EP | 3984311 | A4 | 05 July 2023 |
| CN | 108631847 | A | 09 October 2018 | US | 2020044803 | A1 | 06 February 2020 |
| | | | | US | 11101955 | B2 | 24 August 2021 |
| | | | | WO | 2018171727 | A1 | 27 September 2018 |
| | | | | EP | 3588794 | A1 | 01 January 2020 |
| | | | | EP | 3588794 | A4 | 22 January 2020 |
| | | | | EP | 3588794 | B1 | 26 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311326997